(19) Europäisches Patentamt
European Patent Office
Office européen des brevets

(11) EP 4 112 654 A1

(12) # EUROPEAN PATENT APPLICATION
published in accordance with Art. 153(4) EPC

(43) Date of publication:
**04.01.2023 Bulletin 2023/01**

(21) Application number: **21760741.5**

(22) Date of filing: **04.02.2021**

(51) International Patent Classification (IPC):
***C08F 8/32*** (2006.01) ***C08F 8/44*** (2006.01)
***C08F 8/46*** (2006.01) ***C08F 297/04*** (2006.01)
***C08L 53/02*** (2006.01) ***C08L 101/00*** (2006.01)

(52) Cooperative Patent Classification (CPC):
**C08F 8/32; C08F 8/44; C08F 8/46; C08F 297/04; C08L 53/02; C08L 101/00**

(86) International application number:
**PCT/JP2021/004159**

(87) International publication number:
**WO 2021/171954 (02.09.2021 Gazette 2021/35)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.02.2020 JP 2020033345**

(71) Applicants:
- **Zeon Corporation**
  **Tokyo 100-8246 (JP)**
- **National University Corporation Tokai National Higher Education and Research System**
  **Nagoya-shi, Aichi 464-8601 (JP)**

(72) Inventors:
- **HASHIMOTO, Sadaharu**
  **Tokyo 100-8246 (JP)**
- **NOZAWA, Atsushi**
  **Tokyo 100-8246 (JP)**
- **NORO, Atsushi**
  **Nagoya-shi, Aichi 464-8601 (JP)**
- **KAJITA, Takato**
  **Nagoya-shi, Aichi 464-8601 (JP)**
- **TANAKA, Haruka**
  **Nagoya-shi, Aichi 464-8601 (JP)**
- **MATSUSHITA, Yushu**
  **Nagoya-shi, Aichi 464-8601 (JP)**

(74) Representative: **Beckmann, Claus**
**Kraus & Weisert**
**Patentanwälte PartGmbB**
**Thomas-Wimmer-Ring 15**
**80539 München (DE)**

(54) **THERMOPLASTIC ELASTOMER COMPOSITION FOR IMPACT-RESISTANT MATERIAL AND IMPACT-RESISTANT MATERIAL**

(57) Provided is a thermoplastic elastomer composition for an impact-resistant material, comprising a block copolymer composition comprising a block copolymer (B) in which a functional group capable of noncovalent bonding is introduced into a block copolymer (A) including at least one aromatic vinyl polymer block and at least one conjugated diene polymer block.

EP 4 112 654 A1

## Description

TECHNICAL FIELD

The present invention relates to a thermoplastic elastomer composition which has high tensile strength, high tensile strength at a low elongation rate, high fatigue resistance, and high impact resistance, and is suitable for in applications to impact-resistant materials.

BACKGROUND ART

Traditionally, thermoplastic elastomers are used in a variety of fields as stretchable materials because these exhibit rubber elasticity at normal temperature while when heated, these soften and exhibit fluidity, and are easily molded.

For example, as disclosed in Patent Document 1, some of the present inventors have reported that an elastomer exhibits high elongation at break and simultaneously exhibits significantly increased maximum stress, toughness, and the like, and thus has a high elastic limit and high elasticity, the elastomer containing a block copolymer comprising a hard polymer A in a glass state around room temperature and a soft polymer B in a melt state around room temperature, wherein the polymer B contains polymerized moieties of a monomer having a functional group capable of noncovalent bonding, and monomer components are pseudo-cross-linked via noncovalent bonds formed between molecules and in molecules.

On the other hand, in use for materials for automobiles, those for home appliances, those for food product containers and packagings, those for information devices and apparatuses, construction materials, and the like, thermoplastic elastomers are also required to have high impact resistance depending on parts to which these are applied.

For example, as an attempt to improve impact resistance, Patent Document 2 discloses a highly impact-resistant thermoplastic resin composition comprising (A) 95 to 5 parts by weight of a thermoplastic elastomer comprising a partially or completely cross-linked saturated rubber-like polymer and a polyolefin resin, (B) 5 to 95 parts by weight of a thermoplastic resin (excluding the polyolefin resin), and (C) 0.1 to 50 parts by weight of a compatibilizer relative to 100 parts by weight of the components (A) and (B), wherein the content of the saturated rubber-like polymer in the composition is 1 to 40% by weight. However, the thermoplastic resin composition disclosed in Patent Document 2 does not always have sufficient impact resistance, and thus further improved impact resistance has been desired.

RELATED ART DOCUMENTS

PATENT DOCUMENTS

Patent Document 1: JP 2016-89099 A
Patent Document 2: JP 2001-146533 A

SUMMARY OF THE INVENTION

PROBLEM TO BE SOLVED BY THE INVENTION

The present invention has been made under such circumstances. An object of the present invention is to provide a thermoplastic elastomer composition having high tensile strength, high tensile strength at a low elongation rate, high fatigue resistance, and high impact resistance, and is suitable for applications to impact-resistant materials. Another object of the present invention is to provide an impact-resistant material prepared from such a thermoplastic elastomer composition.

MEANS FOR SOLVING PROBLEMS

The present inventors, who have conducted extensive research to achieve the above objects, have found that a high level of fatigue resistance and a high level of impact resistance are compatible by introducing a functional group capable of noncovalent bonding into a block copolymer which includes an aromatic vinyl polymer block and a conjugated diene polymer block particularly highly elastic and soft among thermoplastic elastomers, and have completed the present invention.

In other words, the present invention provides a thermoplastic elastomer composition for an impact-resistant material, comprising a block copolymer composition comprising a block copolymer (B) in which a functional group capable

of noncovalent bonding is introduced into a block copolymer (A) including at least one aromatic vinyl polymer block and at least one conjugated diene polymer block.

In the present invention, the functional group capable of noncovalent bonding is preferably at least one group selected from the group consisting of functional groups capable of hydrogen bonding, functional groups capable of coordinate bonding, and functional groups capable of ionic bonding.

In the present invention, the functional group capable of noncovalent bonding is preferably at least one group selected from the group consisting of groups formed by reacting a carboxyl group or an acid anhydride group with a base, and groups formed by hydrolyzing an acid anhydride group with a base.

In the present invention, the acid anhydride group is preferably a group derived from an unsaturated dicarboxylic anhydride.

In the present invention, the base is preferably at least one compound selected from the group consisting of alkali metal-containing compounds, alkaline earth metal-containing compounds, ammonia, and amine compounds.

In the present invention, the functional group capable of noncovalent bonding is preferably at least one group selected from the group consisting of ionic groups formed by neutralization by mixing an Arrhenius acid and an Arrhenius base, and ionic groups formed by neutralization by mixing a Bronsted acid and a Bronsted base.

In the present invention, the functional group capable of noncovalent bonding is preferably a group containing a salt of a carboxylic acid.

In the present invention, preferably, the weight average molecular weight of the aromatic vinyl polymer block is within the range of 3,000 to 50,000, the vinyl bond content of the conjugated diene polymer block is within the range of 0.1 mol% to 50 mol%, and the weight average molecular weight of the conjugated diene polymer block is within the range of 10,000 to 500,000.

In the present invention, the aromatic vinyl polymer block is preferably a polystyrene block.

In the present invention, the conjugated diene polymer block is preferably a polybutadiene block, a polyisoprene block, or a polybutadiene-polyisoprene copolymerized block.

Moreover, preferably, the thermoplastic elastomer composition for an impact-resistant material according to the present invention further comprises a different polymer other than the block copolymer composition.

In the present invention, the different polymer other than the block copolymer composition is preferably at least one member selected from the group consisting of acrylic polymers, polycarbonate resins, poly(4-sodium styrenesulfonate), polystyrene resins, styrene-maleimide copolymers, styrene-N-phenylmaleimide-methyl methacrylate copolymers, rubber-reinforced impact-resistant polystyrene, acrylonitrile-styrene copolymers, ABS copolymer resins, and methyl methacrylate resins.

The thermoplastic elastomer composition for an impact-resistant material according to the present invention is preferably for use in a material having fatigue resistance and impact resistance.

Furthermore, the present invention provides an impact-resistant material comprising the thermoplastic elastomer composition for an impact-resistant material according to the present invention.

## EFFECTS OF INVENTION

The present invention can provide a thermoplastic elastomer composition which has high tensile strength, high tensile strength at a low elongation rate, high fatigue resistance, and high impact resistance and is suitable for applications to impact-resistant materials, and an impact-resistant material prepared from such a thermoplastic elastomer composition.

## BRIEF DESCRIPTION OF DRAWINGS

Fig. 1 is a graph showing the result in the tensile test in Example 1.

Fig. 2 is a graph showing the results in the stress relaxation test in Example 1 and Comparative Example 1 where the strain is 1000%.

Fig. 3 is a graph showing the level of strain versus time in a cycle tensile test.

Fig. 4 is a graph showing the result of the cycle tensile test in Example 1.

Fig. 5 is a graph showing the results of the drop weight impact test performed in Examples 1 and 2 and Comparative Example 1, where the quantity of energy applied to the sample is plotted against the time which passed from collision of the striker to the sample.

Fig. 6 is a graph showing the energy absorption ratio in the drop weight impact test performed in Examples 1 to 4 and Comparative Example 1.

Fig. 7 is a graph showing the energy-time curve obtained from the drop weight impact test in Example 1, where the

height h from which the weight is dropped is varied.

Fig. 8 is a graph showing the relation between the impact energy $E_I$ applied and the presence/absence of breakage of the test piece in the drop weight impact test performed in Examples 1 to 4 and Comparative Example 1.

Fig. 9 is a graph showing the result of the tensile test in Comparative Example 1.

Fig. 10 is a graph showing the result of the cycle tensile test in Comparative Example 1.

Fig. 11 is a graph showing the result of the tensile test in Example 2.

Fig. 12 is a graph showing the result of the cycle tensile test in Example 2.

Fig. 13 is a graph showing the energy-time curve obtained from the drop weight impact test in Example 2, where the height h from which the weight is dropped is varied.

Fig. 14 is a graph showing the energy-time curve obtained from the drop weight impact test in Example 3, where the height h from which the weight is dropped is varied.

Fig. 15 is a graph showing the energy-time curve obtained from the drop weight impact test in Example 4, where the height h from which the weight is dropped is varied.

Fig. 16 is an optical microscope image of a sample in Example 8.

Fig. 17 is an optical microscope image of a sample in Example 9.

Fig. 18 is an optical microscope image of a sample in Example 10.

DESCRIPTION OF EMBODIMENTS

The thermoplastic elastomer composition for an impact-resistant material according to the present invention is a thermoplastic elastomer composition for an impact-resistant material comprises a block copolymer composition comprising a block copolymer (B) in which a functional group capable of noncovalent bonding is introduced into a block copolymer (A) including at least one aromatic vinyl polymer block and at least one conjugated diene polymer block.

<Block copolymer composition>

The block copolymer composition used in the present invention is a block copolymer composition comprising a block copolymer (B) in which a functional group capable of noncovalent bonding is introduced into a block copolymer (A) including at least one aromatic vinyl polymer block and at least one conjugated diene polymer block. In other words, the block copolymer composition used in the present invention is a composition of a block copolymer prepared by subjecting the block copolymer (A) to a modification process to introduce a functional group capable of noncovalent bonding thereinto.

The block copolymer (B) which constitutes the block copolymer composition used in the present invention is prepared by introducing a functional group capable of noncovalent bonding (a functional group capable of forming a physical bond other than a covalent bond) into the block copolymer (A). The block copolymer (B) is used as a polymer component for the block copolymer composition used in the present invention.

In this specification, unless otherwise specified, the term "block copolymer" encompasses all the forms of pure block copolymers, random block copolymers, and copolymers having a tapered block structure.

Hereinafter, first, the block copolymer (A) will be described.

(Block copolymer (A))

The block copolymer (A) includes at least one aromatic vinyl polymer block and at least one conjugated diene polymer block.

The aromatic vinyl polymer block included in the block copolymer (A) is a polymer block containing as the main repeating unit, an aromatic vinyl monomer unit prepared by polymerizing a monomer including an aromatic vinyl monomer.

The aromatic vinyl monomer used in formation of the aromatic vinyl polymer block can be any aromatic vinyl compound without limitation. Examples of the aromatic vinyl compound include styrene; styrenes having an alkyl group as a substituent, such as $\alpha$-methylstyrene, 2-methylstyrene, 3-methylstyrene, 4-methylstyrene, 2-ethylstyrene, 3-ethylstyrene, 4-ethylstyrene, 2,4-diisopropylstyrene, 2,4-dimethylstyrene, 4-t-butylstyrene, and 5-t-butyl-2-methylstyrene; styrenes having an ether group or an ester group as a substituent, such as 4-acetoxystyrene, 4-(1-ethoxyethoxy)styrene, 4-methoxystyrene, 4-ethoxystyrene, and 4-t-butoxystyrene; styrenes having a halogen atom as a substituent, such as 2-chlorostyrene, 3-chlorostyrene, 4-chlorostyrene, 4-bromostyrene, and 2,4-dibromostyrene; styrenes having an alkyl group and a halogen atom as substituents, such as 2-methyl-4,6-dichlorostyrene; vinyl naphthalene; and the like. These aromatic vinyl monomers can be used alone or in combination.

Among these aromatic vinyl compounds, from the viewpoint of availability, preferred are styrene, styrenes having a $C_1$ to $C_{12}$ alkyl group as a substituent, and styrenes having an ether group or an ester group as a substituent, and particularly preferred is use of styrene. In other words, the aromatic vinyl polymer block is preferably a polystyrene

block containing styrene as the main repeating unit.

The aromatic vinyl polymer block may contain monomer units different from aromatic vinyl monomer units as long as the aromatic vinyl polymer block contains an aromatic vinyl monomer unit as the main repeating unit. Examples of monomers forming monomer units which are different from aromatic vinyl monomer units and can be contained in the aromatic vinyl polymer block include conjugated diene monomers such as 1,3-butadiene and isoprene (2-methyl-1,3-butadiene); α,β-unsaturated nitrile monomers such as acrylonitrile and methacrylonitrile; unsaturated carboxylic acid anhydride monomers such as maleic anhydride, butenyl succinic anhydride, tetrahydrophthalic anhydride, and citraconic anhydride; unsaturated carboxylic acid ester monomers such as methyl acrylate, ethyl acrylate, 2-ethylhexyl acrylate, methyl methacrylate, ethyl methacrylate, and 2-ethylhexyl methacrylate; non-conjugated diene monomers preferably having 5 to 12 carbon atoms, such as 1,4-pentadiene and 1,4-hexadiene; and the like.

When the block copolymer (A) includes a plurality of aromatic vinyl polymer blocks, these aromatic vinyl polymer blocks may be the same or different. For example, as their main repeating units, these aromatic vinyl polymer blocks may contain the same aromatic vinyl monomer units, or may contain different aromatic vinyl monomer units.

The content of the aromatic vinyl monomer units in the aromatic vinyl polymer block is preferably 60% by mass or more, more preferably 80% by mass or more, particularly preferably substantially 100% by mass. When the content of the aromatic vinyl monomer units in the aromatic vinyl polymer block falls within these ranges, a high level of fatigue resistance and a high level of impact resistance can be provided at the same time.

Although not particularly limited, the content of the aromatic vinyl monomer units in the total monomer units in the block copolymer (A) is selected within the range of usually 5 to 90% by mass, preferably 10 to 60% by mass. When the content of the aromatic vinyl monomer units in the block copolymer (A) falls within these ranges, a high level of fatigue resistance and a high level of impact resistance can be provided at the same time. The content of the aromatic vinyl monomer units in the block copolymer (A) can be measured by $^1$H-NMR.

The conjugated diene polymer block included in the block copolymer (A) is a polymer block containing, as the main repeating unit, a conjugated diene monomer unit prepared by polymerizing a monomer including a conjugated diene monomer.

The conjugated diene monomer used in formation of the conjugated diene polymer block can be any conjugated diene compound. Examples of the conjugated diene compound include 1,3-butadiene, isoprene, 2,3-dimethyl-1,3-butadiene, 2-chloro-1,3-butadiene, 1,3-pentadiene,1,3-hexadiene, and the like. These conjugated diene monomers can be used alone or in combination.

Among these, use of 1,3-butadiene and/or isoprene is preferred. In other words, the conjugated diene polymer block is preferably a polybutadiene block containing 1,3-butadiene as the main repeating unit, a polyisoprene block containing isoprene as the main repeating unit, or a polybutadiene-polyisoprene copolymerized block containing 1,3-butadiene and isoprene as the main repeating unit.

The conjugated diene polymer block may contain monomer units different from conjugated diene monomer units as long as the conjugated diene polymer block contains a conjugated diene monomer unit as the main repeating unit. Examples of monomers forming monomer units which are different from conjugated diene monomer units and can be contained in the conjugated diene polymer block include aromatic vinyl monomers such as styrene and α-methylstyrene; α,β-unsaturated nitrile monomers; unsaturated carboxylic acid anhydride monomers; unsaturated carboxylic acid ester monomers; non-conjugated diene monomers; and the like. Specific examples of the monomers can be the same monomers as those which form monomer units which are different from aromatic vinyl monomer units and can be contained in the aromatic vinyl polymer block described above.

When the block copolymer (A) contains a plurality of conjugated diene polymer blocks, these conjugated diene polymer blocks may be the same or different. For example, as their main repeating units, these conjugated diene polymer blocks may contain the same conjugated diene monomer units, or may contain different conjugated diene monomer units. Furthermore, unsaturated bonds of the conjugated diene polymer block may be partially hydrogenated.

The content of the conjugated diene monomer units in the conjugated diene polymer block is preferably 50% by mass or more, more preferably 60% by mass or more, still more preferably 75% by mass or more, further still more preferably 80% by mass or more, particularly preferably substantially 100% by mass. When the content of the conjugated diene monomer units in the conjugated diene polymer block falls within these ranges, a high level of fatigue resistance and a high level of impact resistance can be provided at the same time.

Although not particularly limited, the content of the conjugated diene monomer units in the total monomer units in the block copolymer (A) is selected within the range of usually 10% by mass to 95% by mass, preferably 40% by mass to 90% by mass. When the content of the conjugated diene monomer units in the block copolymer (A) falls within these ranges, a high level of fatigue resistance and a high level of impact resistance can be provided at the same time. The content of the conjugated diene monomer units in the block copolymer (A) can be measured by $^1$H-NMR.

The vinyl bond content in the conjugated diene polymer block (proportion of the 1,2-vinyl bond and the 3,4-vinyl bond in the total conjugated diene monomer units in the conjugated diene polymer block) is preferably within the range of 0.1 to 50 mol%, more preferably 1 to 30 mol%, particularly preferably 3 to 10 mol%, although not particularly

limited thereto. The vinyl bond content in the conjugated diene polymer block can be measured by $^1$H-NMR.

For each of the polymer blocks, the block copolymer (A) can have any number of polymer blocks and any arrangement thereof as long as the block copolymer (A) contains at least one aromatic vinyl polymer block and at least one conjugated diene polymer block.

When Ar represents an aromatic vinyl polymer block, D represents a conjugated diene polymer block, X represents a single bond or a residue of a coupling agent, and n represents an integer of 2 or more, specific examples of the arrangement of the block copolymer (A) include, but should not be limited to, aromatic vinyl-conjugated diene block copolymers represented by Ar-D, aromatic vinyl-conjugated diene-aromatic vinyl block copolymers represented by Ar-D-Ar or $(Ar-D)_n-X$, conjugated diene-aromatic vinyl-conjugated diene block copolymers represented by D-Ar-D or $(D-Ar)_n-X$, aromatic vinyl-conjugated diene-aromatic vinyl-conjugated diene block copolymers represented by Ar-D-Ar-D, and a mixture of block copolymers which contains two or more of the above-mentioned block copolymers in any combination. Among these, the block copolymer (A) is suitably an aromatic vinyl-conjugated diene-aromatic vinyl block copolymer represented by Ar-D-Ar or $(Ar-D)_n-X$.

A coupling agent used in the above specific examples is, for example, an alkoxysilane compound having two or more alkoxy groups in one molecule, the alkoxy groups being directly bonded to a silicon atom. Specific examples of the alkoxysilane compound include dialkyldialkoxysilane compounds such as dimethyldimethoxysilane, dimethyldiethoxysilane, dimethyldipropoxysilane, dimethyldibutoxysilane, dimethyldiphenoxysilane, diethyldimethoxysilane, diethyldiethoxysilane, diethyldipropoxysilane, diethyldibutoxysilane, and diethyldiphenoxysilane; monoalkyltrialkoxysilane compounds such as methyltrimethoxysilane, methyltriethoxysilane, methyltripropoxysilane, methyltributoxysilane, methyltriphenoxysilane, ethyltrimethoxysilane, ethyltriethoxysilane, ethyltripropoxysilane, ethyltributoxysilane, and ethyltriphenoxysilane; tetraalkoxysilane compounds such as tetramethoxysilane, tetraethoxysilane, tetrapropoxysilane, tetrabutoxysilane, tetraphenoxysilane, tetratoluyloxysilane; alkenylalkoxysilane compounds such as vinyltrimethoxysilane, vinyltriethoxysilane, vinyltripropoxysilane, vinyltributoxysilane, vinyltriphenoxysilane, allyltrimethoxysilane, octenyltrimethoxysilane, divinyldimethoxysilane, and styryltrimethoxysilane; arylalkoxysilane compounds such as phenyltrimethoxysilane, phenyltriethoxysilane, phenyltripropoxysilane, phenyltributoxysilane, and phenyltriphenoxysilane; halogenoalkoxysilane compounds such as trimethoxychlorosilane, triethoxychlorosilane, tripropoxychlorosilane, tributoxychlorosilane, triphenoxychlorosilane, dimethoxydichlorosilane, dipropoxydichlorosilane, diphenoxydichlorosilane, methoxytrichlorosilane, ethoxytrichlorosilane, propoxytrichlorosilane, phenoxytrichlorosilane, trimethoxybromosilane, triethoxybromosilane, tripropoxybromosilane, triphenoxybromosilane, dimethoxydibromosilane, diethoxydibromosilane, diphenoxydibromosilane, methoxytribromosilane, ethoxytribromosilane, propoxytribromosilane, phenoxytribromosilane, trimethoxyiodosilane, triethoxyiodosilane, tripropoxyiodosilane, triphenoxyiodosilane, dimethoxydiiodosilane, diethoxydiiodosilane, dipropoxyiodosilane, methoxytriiodosilane, ethoxytriiodosilane, propoxytriiodosilane, and phenoxytriiodosilane; halogenoalkylalkoxysilane compounds such as β-chloroethylmethyldimethoxysilane and γ-chloropropylmethyldimethoxysilane; hexamethoxydisilane, hexaethoxydisilane, bis(trimethoxysilyl)methane, bis(triethoxysilyl)methane, bis(trimethoxysilyl)ethane, bis(triethoxysilyl)ethane, bis(trimethoxysilyl)propane, bis(triethoxysilyl)propane, bis(trimethoxysilyl)butane, bis(triethoxysilyl)butane, bis(trimethoxysilyl)heptane, bis(triethoxysilyl)heptane, bis(trimethoxysilyl)hexane, bis(triethoxysilyl)hexane, bis(trimethoxysilyl)benzene, bis(triethoxysilyl)benzene, bis(trimethoxysilyl)benzene, bis(trimethoxysilyl)cyclohexane, bis(triethoxysilyl)cyclohexane, bis(triethoxysilyl)benzene, and bis(3-triethoxysilylpropyl)ethane; and the like.

Among these, preferably used are alkoxysilane compounds having only alkoxy groups as functional groups reactive with the active terminal of the polymer. Specifically, dialkyldialkoxysilane compounds, monoalkyltrialkoxysilane compounds, or tetraalkoxysilane compounds are more preferably used, and tetraalkoxysilane compounds are particularly preferably used. Use of such an alkoxysilane compound as a coupling agent can provide a high level of fatigue resistance and a high level of impact resistance at the same time.

As the coupling agent, bifunctional halogenated silanes such as dichlorosilane, monomethyldichlorosilane, and dimethyldichlorosilane; bifunctional halogenated alkanes such as dichloroethane, dibromoethane, methylene chloride, and dibromomethane; bifunctional halogenated tin compounds such as dichlorotin, monomethyldichlorotin, dimethyldichlorotin, monoethyldichlorotin, diethyldichlorotin, monobutyldichlorotin, and dibutyldichlorotin; and the like can also be used, for example.

These coupling agents can be used alone or in combination.

The block copolymer (A) has a weight average molecular weight of usually 30,000 to 500,000, preferably 60,000 to 470,000, more preferably 90,000 to 450,000, but not limited thereto.

Each of the polymer blocks in the block copolymer (A) can have any weight average molecular weight without limitation. The aromatic vinyl polymer block has a weight average molecular weight in the range of preferably 3,000 to 50,000, more preferably 6,000 to 20,000. The conjugated diene polymer block has a weight average molecular weight in the range of preferably 10,000 to 500,000, more preferably 40,000 to 400,000. A conjugated diene polymer block having a weight average molecular weight within these ranges can provide a high level of fatigue resistance and a high level of impact resistance at the same time.

For the block copolymer (A) and each of the polymer blocks constituting the block copolymer (A), the molecular weight distribution represented by the ratio (Mw/Mn) of the weight average molecular weight (Mw) to the number average molecular weight (Mn) is usually 1.8 or less, preferably 1.3 or less, more preferably 1.1 or less, but not limited thereto. When the block copolymer (A) and the polymer blocks constituting the block copolymer (A) each have a molecular weight distribution within these ranges, a high level of fatigue resistance and a high level of impact resistance can be provided at the same time.

The weight average molecular weight (Mw) and the number average molecular weight (Mn) of the block copolymer (A) are determined as values against polystyrene standards in measurement by high performance liquid chromatography using tetrahydrofuran (THF) as a solvent.

Although the block copolymer (A) can have any melt index without limitation, the melt index as a value measured according to ASTM D-1238 (G condition, 200°C, 5 kg) is usually 1 to 1000 g/10 min., preferably 3 to 700 g/10 min., more preferably 5 to 500 g/10 min.

The block copolymer (A) can be prepared by a normal method. The method of preparing the block copolymer (A) will be described later.

In the present invention, a commercially available block copolymer can also be used as the block copolymer (A). For example, the followings can be used: "Quintac (registered trademark)" (available from ZEON Corporation), "JSR-SIS (registered trademark)" (available from JSR Corporation), "Vector (registered trademark)" (available from DEXCO polymers L.P.), "Asaprene (registered trademark)" (available from Asahi Kasei Chemicals Corporation), "Tufprene (registered trademark)" (available from Asahi Kasei Chemicals Corporation), "Tuftec (registered trademark)" (available from Asahi Kasei Chemicals Corporation), "Septon (registered trademark)" (available from Kuraray Co., Ltd.), "Kraton (registered trademark)" (available from Kraton JSR Elastomers K.K.), and the like.

(Block copolymer (B))

The block copolymer (B) is prepared by introducing a functional group capable of noncovalent bonding into the block copolymer (A) described above.

In the block copolymer composition used in the present invention, since the block copolymer (B) has a functional group capable of noncovalent bonding (a functional group capable of forming a physical bond other than a covalent bond), pseudo-cross-links can be formed between polymer chains via a noncovalent bond (a physical bond other than the covalent bond) formed by the functional group capable of noncovalent bonding. In particular, because the noncovalent bond can dissociate or recombine, the block copolymer composition used in the present invention can attain properties different from those of traditional block copolymer compositions. Specifically, the block copolymer composition used in the present invention exhibits fluidity at high temperature because the aromatic vinyl polymer blocks in the block copolymer are melted, and exhibits elasticity at room temperature because the aromatic vinyl polymer blocks in the block copolymer are vitrified to serve as physical cross-linking points. In such a situation, the noncovalent bonds formed by the functional groups capable of noncovalent bonding serve as noncovalently bondable cross-linking points together with physical cross-linking points caused in the aromatic vinyl polymer block in the block copolymer, and thus can maintain or improve the elasticity of the block copolymer composition. On the other hand, when stress or strain is applied, in principle, stress can be dispersed according to an increase in the number of noncovalently bondable cross-linking points, and stress can be relaxed by recombination of the functional groups capable of noncovalent bonding to protect the physical cross-linking points. In other words, because the physical cross-linking points are maintained even after stress is relaxed, high fatigue resistance can be provided while breakage is suppressed. In addition, in the block copolymer composition used in the present invention, when a large impact is applied, impact energy can be dispersed by dissociation of the noncovalent bonds formed by the functional groups capable of noncovalent bonding. Thus, breakage can be suppressed, high impact absorbing properties can be demonstrated, and high impact resistance can be provided.

In the present invention, the block copolymer (B) is prepared by introducing the functional group capable of noncovalent bonding into the block copolymer (A), and therefore the tensile strength possessed by the block copolymer including an aromatic vinyl polymer block and a conjugated diene polymer block can be maintained. In contrast, even if preparation of the block copolymer (B) by copolymerizing a monomer having a functional group capable of noncovalent bonding is tried, mass synthesis of the block polymer (B) is not easy, and it is difficult to prepare a sufficient amount of a desired block copolymer.

Examples of the functional group capable of noncovalent bonding include functional groups capable of hydrogen bonding, those capable of coordinate bonding, those capable of iconic bonding, and the like. Among these, preferred are functional groups capable of hydrogen bonding. The hydrogen bond has an appropriate association force per bond (in other words, the bonding strength is weak or the relaxation time is short), and is rearrangeable.

Examples of the functional group capable of noncovalent bonding include an amide group, an imide group, a urethane bond, a carboxyl group or salts thereof, and a hydroxyl group or salts thereof.

The functional group capable of hydrogen bonding is preferably at least one group selected from the group

consisting of an amide group, an imide group, a urethane bond, a carboxyl group, and a hydroxyl group.

It is sufficient that the block copolymer (B) has a functional group capable of noncovalent bonding. The functional group capable of noncovalent bonding may be directly bonded to the block copolymer, or may be bonded thereto via a linking group.

The block copolymer (B) is prepared by introducing the functional group capable of noncovalent bonding into the block copolymer (A). The method of introducing the functional group capable of noncovalent bonding may be a method enabling introduction of the functional group capable of noncovalent bonding to the block copolymer (A), and examples thereof include a modification method with a modifier, a method using a functional group conversion reaction of an alkene, and the like. Among these, preferred is a modification method with a modifier. In other words, preferably, the functional group capable of noncovalent bonding contains a residue of a modifier.

When the modification method with a modifier is used, the functional group capable of noncovalent bonding may be introduced by modification with a modifier, or the functional group capable of noncovalent bonding may be introduced by modification with a modifier, followed by a further reaction.

The term "residue of the modifier" indicates a moiety derived from the modifier in a reaction product formed when the modifier reacts with the block copolymer (A) or in a reaction product formed when the modifier reacts with the block copolymer (A) and further reacts with another compound.

Examples of the modifier include acid modifiers. Examples of the acid modifiers include unsaturated carboxylic acids, unsaturated dicarboxylic anhydrides, and the like. Among these, preferred are unsaturated dicarboxylic anhydrides because of their easiness in reaction, economic efficiency, and the like. Unsaturated carboxylic acids and unsaturated dicarboxylic anhydrides will be described later.

When the acid modifier is an unsaturated carboxylic acid, a carboxyl group derived from the unsaturated carboxylic acid is introduced into the block copolymer (A) by performing modification. Although the carboxyl group corresponds to the functional group capable of noncovalent bonding, the carboxyl group can be converted into another functional group capable of noncovalent bonding by performing modification with the unsaturated carboxylic acid as the acid modifier, followed by a further reaction.

When the acid modifier is an unsaturated dicarboxylic anhydride, an acid anhydride group derived from the unsaturated dicarboxylic anhydride is introduced into the block copolymer (A) by performing modification. When the acid modifier is an unsaturated dicarboxylic anhydride, a functional group capable of noncovalent bonding can be formed by performing modification with the acid modifier, followed by a further reaction. Specifically, a functional group capable of noncovalent bonding can be formed by reacting the acid anhydride group with a base by a base treatment or by hydrolyzing the acid anhydride group with a base.

Among these, the method of introducing the functional group capable of noncovalent bonding is preferably a method of introducing a functional group capable of noncovalent bonding by performing modification with an acid modifier, followed by a further base treatment. In other words, the block copolymer (B) is preferably prepared by further subjecting a modified block copolymer (C) to a base treatment, the modified block copolymer (C) being prepared by modifying the block copolymer (A) with an acid. More specifically, the functional group capable of noncovalent bonding is preferably a group formed by reacting a carboxyl group or acid anhydride group introduced into the block copolymer (A) with a base. Alternatively, the functional group capable of noncovalent bonding is preferably a group formed by hydrolyzing an acid anhydride group introduced into the block copolymer (A) with a base. In particular, the functional group capable of noncovalent bonding is preferably a group formed by reacting an acid anhydride group introduced into the block copolymer (A) with a base. The method of introducing such a functional group capable of noncovalent bonding will be described later.

When the functional group capable of noncovalent bonding is a group formed by reacting a carboxyl group or acid anhydride group introduced into the block copolymer (A) with a base, it is sufficient that the carboxyl group or acid anhydride group introduced into the block copolymer (A) is at least partially reacted with a base. The carboxyl group or the acid anhydride group may be partially reacted with a base, or may be completely reacted with a base. In other words, the block copolymer (B) may have both of a group formed by reacting the carboxyl group or acid anhydride group introduced into the block copolymer (A) with a base and the carboxyl group or acid anhydride group introduced into the block copolymer (A).

When the functional group capable of noncovalent bonding is a group formed by hydrolyzing an acid anhydride group introduced into the block copolymer (A) with a base, it is sufficient that the acid anhydride group introduced into the block copolymer (A) is at least partially hydrolyzed. The acid anhydride group may be partially hydrolyzed, or may be completely hydrolyzed. In other words, the block copolymer (B) may have both a group formed by hydrolyzing the acid anhydride group introduced into the block copolymer (A) with a base and the acid anhydride group introduced into the block copolymer (A).

Examples of the group formed by reacting a carboxyl group or an acid anhydride group with a base specifically include an amide group, metal salts of a carboxyl group, and the like. Examples of the group formed by hydrolyzing an acid anhydride group with a base specifically include a carboxyl group and the like.

As above, the functional group capable of noncovalent bonding preferably contains a residue of the acid modifier. Specifically, the functional group capable of noncovalent bonding preferably contains a residue of an unsaturated carboxylic acid or an unsaturated dicarboxylic anhydride, and more preferably contains a residue of an unsaturated dicarboxylic anhydride.

Examples of the unsaturated carboxylic acid include ethylenically unsaturated carboxylic acids having 8 or less carbon atoms, such as acrylic acid, methacrylic acid, crotonic acid, maleic acid, fumaric acid, itaconic acid, and citraconic acid; and Diels-Alder adducts of a conjugated diene and an $\alpha,\beta$-unsaturated dicarboxylic acid having 8 or less carbon atoms, such as 3,6-endomethylene-1,2,3,6-tetrahydrophthalic acid.

Examples of the unsaturated dicarboxylic anhydride include $\alpha,\beta$-unsaturated dicarboxylic anhydrides having 8 or less carbon atoms, such as maleic anhydride, itaconic anhydride, and citraconic anhydride; and Diels-Alder adducts of a conjugated diene and an $\alpha,\beta$-unsaturated dicarboxylic anhydride having 8 or less carbon atoms, such as 3,6-endomethylene-1,2,3,6-tetrahydrophthalic anhydride.

From the viewpoint of easiness in reaction, economic efficiency, and the like, unsaturated dicarboxylic anhydrides are preferred, $\alpha,\beta$-unsaturated aliphatic dicarboxylic anhydrides having 8 or less carbon atoms are more preferred, and maleic anhydride is particularly preferred.

The functional group capable of noncovalent bonding may contain (a) residue(s) of one or two or more unsaturated carboxylic acids or unsaturated dicarboxylic anhydrides.

It is sufficient that the base is a base which can react with a carboxyl group or an acid anhydride group to form a functional group capable of noncovalent bonding or a base which can hydrolyze an acid anhydride group. Examples of the base include at least one compound selected from the group consisting of alkali metal-containing compounds, alkaline earth metal-containing compounds, ammonia, and amine compounds. Examples of the alkali metal-containing compounds include oxides, hydroxides, carbonates, hydrogencarbonates, acetates, sulfates, and phosphates of alkali metals such as sodium, lithium, and potassium. Examples of the alkaline earth metal-containing compounds include oxides, hydroxides, carbonates, hydrogencarbonates, acetates, sulfates, and phosphates of alkaline earth metals such as magnesium and calcium. The amine compound may be any one of a primary amine compound, a secondary amine compound, and a tertiary amine compound. The amine compound may be a monoamine, or may be a diamine. Preferably used is a monoamine because of its availability. Examples of the amine compound include aliphatic amines, aromatic amines, alicyclic amines, heterocyclic amines, and the like. Among these, preferred are aliphatic amines. In particular, $C_1$ to $C_{12}$ alkylamines are preferred, and $C_2$, $C_4$, or $C_6$ alkylamines are more preferred.

Among these, the base is preferably one compound selected from the group consisting of ammonia, primary amine compounds, and secondary amine compounds. These can react with a carboxyl group or an acid anhydride group to form an amide group.

Alternatively, the functional group capable of noncovalent bonding is preferably an ionic group. Here, the term "ionic group" indicates a functional group which can cause ionic interaction and is capable of ionic bonding.

Among these noncovalent bonds, ionic interaction has a strong bonding strength. Thus, the block copolymer (B) having an ionic group as the functional group capable of noncovalent bonding can more effectively demonstrate the effects derived from the functional group capable of noncovalent bonding.

Furthermore, because the ionic group can more effectively demonstrate the effects as the functional group capable of noncovalent bonding, the effects can be sufficiently obtained even with a relatively low introduction ratio of the ionic group.

From the viewpoint of easiness in introduction into the block copolymer (A), the ionic group is preferably an ionic group formed by neutralization by mixing an Arrhenius acid and an Arrhenius base, and/or an ionic group formed by neutralization by mixing a Bronsted acid and a Bronsted base.

Specifically, examples of such ionic groups include ionic groups containing salts of carboxylic acids, those containing salts of phosphoric acid, those containing salts of sulfonic acid, those containing salts of anions obtained by removing a proton from a hydroxy group in alcohols, and the like. Examples of salts of carboxylic acids, phosphoric acid, and sulfonic acid include alkali metal salts thereof, alkaline earth metal salts thereof, ammonium salts thereof, pyridinium salts thereof, imidazolium salts thereof, and the like.

Among these, preferred are ionic groups containing salts of carboxylic acids because there are easily introduced into the block copolymer (A). These salts of carboxylic acids are preferably alkali metal salts such as sodium salts, lithium salts, and potassium salts and alkaline earth metal salts such as magnesium salts, calcium salts, and barium salts.

It is sufficient that the method of introducing an ionic group is a method enabling introduction of the ionic group into the block copolymer (A), and examples thereof include a modification method with a modifier, a method of using a functional group conversion reaction of an alkene, and the like. Among these, preferred is a modification method with a modifier.

As the modifier, an Arrhenius acid and/or a Bronsted acid can be used, for example. Specifically, examples of the modifier include unsaturated carboxylic acids, unsaturated dicarboxylic anhydrides, unsaturated phosphoric acid and acid anhydrides thereof, unsaturated sulfonic acid and acid anhydrides thereof, and the like. Among these, preferred

are unsaturated dicarboxylic anhydrides because of easiness in reaction, economic efficiency, and the like.

When the acid modifier is an unsaturated dicarboxylic anhydride, an acid anhydride group derived from the unsaturated dicarboxylic anhydride is introduced into the block copolymer (A). When the acid modifier is an unsaturated dicarboxylic anhydride, the acid anhydride group can be converted into the ionic group by performing modification with the acid modifier, followed by a further reaction. In this case, alternatively, the acid anhydride group can be converted into a nonionic functional group capable of noncovalent bonding by performing modification with the acid modifier, followed by a further reaction, and the resulting nonionic functional group can be converted into the ionic group by a further reaction. Specifically, the acid anhydride group can be reacted with a base by a base treatment to convert the acid anhydride group into an amide group and a carboxyl group, and the carboxyl group can be reacted with a base by a further base treatment to convert the carboxyl group into a salt of a carboxylic acid. Alternatively, the acid anhydride group can be hydrolyzed to convert the acid anhydride group into a carboxyl group, and the carboxyl group can further be reacted with a base by a base treatment to convert the carboxyl group into a salt of a carboxylic acid.

In the present invention, the ionic group is preferably a group formed by reacting an acidic group derived from an Arrhenius acid, which is introduced into the block copolymer (A), with an Arrhenius base and/or a group formed by reacting an acidic group derived from a Bronsted acid, which is introduced into the block copolymer (A), with a Bronsted base.

Examples of acidic groups derived from an Arrhenius acid and/or a Bronsted acid include a carboxyl group, a phosphate group, a sulfo group, and the like. Examples of the Arrhenius base and/or the Bronsted base include metal-containing compounds, ammonium, amine compounds, pyridine, imidazole, and the like.

Specifically, the ionic group is preferably any one of a group formed by reacting a carboxyl group introduced into the block copolymer (A) with a first base, a group formed by reacting an acid anhydride group introduced into the block copolymer (A) with a second base and further reacting the resulting carboxyl group with a third base, and a group formed by hydrolyzing an acid anhydride group introduced into the block copolymer (A) and further reacting the resulting carboxyl group with a fourth base. In particular, the ionic group is preferably a group formed by reacting an acid anhydride group introduced into the block copolymer (A) with the second base and further reacting the resulting carboxyl group with the third base. In this case, the block copolymer (B) can have an ionic group and a nonionic functional group capable of noncovalent bonding as the functional groups capable of noncovalent bonding, and particularly, the block copolymer (B) can have an ionic group and a functional group capable of hydrogen bonding. Specific examples of the group formed by reacting a carboxyl group with the first base, the third base, or the fourth base include salts of carboxylic acids. Specific examples of the group formed by reacting an acid anhydride group with the second base include an amide group and a carboxyl group. Specific examples of the group formed by hydrolyzing an acid anhydride group include a carboxyl group.

When the ionic group is a group formed by reacting a carboxyl group introduced into the block copolymer (A) with the first base, it is sufficient that at least part of the carboxyl groups introduced into the block copolymer (A) is reacted with the first base. The carboxyl groups may be partially reacted with the first base, or may be completely reacted with the first base. In other words, the block copolymer (B) may have both of a group formed by reacting a carboxyl group introduced into the block copolymer (A) with the first base and the carboxyl group introduced into the block copolymer (A).

When the ionic group is a group formed by reacting an acid anhydride group introduced into the block copolymer (A) with the second base and further reacting the resulting carboxyl group with the third base, it is sufficient that at least part of the acid anhydride groups introduced into the block copolymer (A) is reacted with the second base. The acid anhydride groups may be partially reacted with the second base, or may be completely reacted with the second base. Similarly, it is sufficient that at least part of the carboxyl groups formed by reacting an acid anhydride group introduced into the block copolymer (A) with the second base is reacted with the third base. The carboxyl groups may be partially reacted with the third base, or may be completely reacted with the third base. In other words, for example, the block copolymer (B) may have a group formed by reacting an acid anhydride group introduced into the block copolymer (A) with the second base and further reacting the resulting carboxyl group with the third base, the acid anhydride group introduced into the block copolymer (A), and a group formed by reacting the acid anhydride group introduced into the block copolymer (A) with the second base.

When the ionic group is a group formed by hydrolyzing an acid anhydride group introduced into the block copolymer (A) and further reacting the resulting carboxyl group with the fourth base, it is sufficient that at least part of the acid anhydride groups introduced into the block copolymer (A) is hydrolyzed. The acid anhydride groups may be partially hydrolyzed, or may be completely hydrolyzed. Similarly, it is sufficient that at least part of the carboxyl groups formed by hydrolyzing the acid anhydride groups introduced into the block copolymer (A) is reacted with the fourth base. The carboxyl groups may be partially reacted with the fourth base, or may be completely reacted with the fourth base. In other words, for example, the block copolymer (B) may have a group formed by hydrolyzing an acid anhydride group introduced into the block copolymer (A) and further reacting the resulting carboxyl group with the fourth base, the acid anhydride group introduced into the block copolymer (A), and a group formed by hydrolyzing the acid anhydride group introduced into the block copolymer (A).

Examples of the Arrhenius acid and/or the Bronsted acid used to introduce the ionic group include those unsaturated carboxylic acids and unsaturated dicarboxylic anhydrides listed above. From the viewpoint of easiness in reaction, economic efficiency, and the like, preferred are unsaturated dicarboxylic anhydrides, more preferred are α,β-unsaturated aliphatic dicarboxylic anhydrides having 8 or less carbon atoms, and particularly preferred is maleic anhydride.

It is sufficient that the first base, the third base, and the fourth base are bases which can form the ionic group by reacting with a carboxyl group. An Arrhenius base and/or a Bronsted base can be used as these bases. Examples of these bases include metal-containing compounds, ammonia, amine compounds, pyridine, and imidazole.

Among these, the first base, the third base, and the fourth base are preferably at least one compound selected from the group consisting of alkali metal-containing compounds and alkaline earth metal-containing compounds because these can result in stable formation of the ionic group. Examples of the alkali metal-containing compounds include alkoxides, oxides, hydroxides, carbonates, hydrogencarbonates, acetates, sulfates, and phosphates of alkali metals such as sodium, lithium, and potassium. Examples of the alkaline earth metal-containing compounds include alkoxides, oxides, hydroxides, carbonates, hydrogencarbonates, acetates, sulfates, and phosphates of alkaline earth metals such as magnesium, calcium, and barium.

It is sufficient that the second base is a base which can form a carboxyl group by reacting with an acid anhydride group. Examples of the second base include at least one compound selected from the group consisting of ammonia and amine compounds. The amine compound may be any one of a primary amine compound and a secondary amine compound. The amine compound may be a monoamine, or may be a diamine. Preferably used is a monoamine because of its availability. Examples of the amine compounds include aliphatic amines, aromatic amines, alicyclic amines, heterocyclic amines, and the like. Among these, preferred are aliphatic amines. In particular, preferred are $C_1$ to $C_{12}$ alkylamines, and more preferred are $C_2$, $C_4$, or $C_6$ alkylamines.

Among these, the second base is preferably at least one compound selected from the group consisting of ammonia, primary amine compounds, and secondary amine compounds because these can form an amide group by reacting with an acid anhydride group.

The ionic group is preferably a group formed by reacting an acid anhydride group introduced into the block copolymer (A) with an amine compound and further reacting the resulting carboxyl group with the third base. In this case, a carboxyl group and an amide group are formed through a reaction of the acid anhydride group with the amine compound, and a salt of a carboxylic acid is formed through a reaction of the carboxyl group with the third base. In other words, the block copolymer (B) can have, as the functional groups capable of noncovalent bonding, a salt of a carboxylic acid, which is an ionic group, and an amide group, which is a nonionic functional group capable of noncovalent bonding and a functional group capable of hydrogen bonding.

Although the introduction ratio of the functional group capable of noncovalent bonding in the block copolymer (B) is not particularly limited, the introduction ratio can be within the range of 0.1 mol% or more and 75 mol% or less, preferably 0.5 mol% or more and 50 mol% or less, more preferably 3 mol% or more and 17.5 mol% or less in 100 mol% of conjugated diene monomer units in the block copolymer (B). Control of the introduction ratio of the functional group capable of noncovalent bonding within these ranges can appropriately increase the effects obtained by introduction of the functional group capable of noncovalent bonding while effectively preventing breakage which is readily caused by stress concentration on the physical cross-linking points before the rearrangement of the functional groups capable of noncovalent bonding. The introduction ratio of the functional group capable of noncovalent bonding can be calculated using $^1$H-NMR. Introduction of the functional group capable of noncovalent bonding can be verified by $^1$H-NMR and/or infrared spectroscopy.

Alternatively, when the functional group capable of noncovalent bonding is the ionic group, the introduction ratio of the ionic group is preferably 0.1 mol% to 25 mol%, more preferably 0.5 mol% to 15 mol%, still more preferably 3 to 8.5 mol% in 100 mol% of conjugated diene monomer units in the block copolymer (B).

When the functional group capable of noncovalent bonding is the ionic group, the molar ratio (ionic group/nonionic functional group capable of noncovalent bonding) of the ionic group to the nonionic functional group capable of noncovalent bonding in the block copolymer (B) is within the range of preferably 0.1/100 to 100/0, more preferably 1/99 to 100/0, still more preferably 20/80 to 80/20, further still more preferably 40/60 to 60/40. The molar ratio can be calculated using $^1$H-NMR and/or infrared spectroscopy.

In addition to the block copolymer (B), the block copolymer composition used in the present invention may contain the block copolymer (A), for example. In other words, when the block copolymer composition used in the present invention comprises two or more block copolymers each including at least one aromatic vinyl polymer block and at least one conjugated diene polymer block, it is sufficient that the at least one block copolymer has a functional group capable of noncovalent bonding introduced thereto.

The content of the block copolymer (A) in the block copolymer composition is preferably less than 50% by mass, more preferably 20% by mass or less.

It is preferred that the block copolymer composition used in the present invention contain substantially only the

block copolymer (B) as a polymer component, or contains substantially only the block copolymer (B) and the block copolymer (A) as polymer components.

<Method of producing block copolymer composition>

A suitable method of producing the block copolymer composition used in the present invention is a production method comprising a first step of reacting a block copolymer (A) with an acid modifier to yield a block copolymer (C) into which an acidic group derived from the acid modifier is introduced; and a second step of subjecting the block copolymer (C) to a base treatment to yield a block copolymer (B) in which a functional group capable of noncovalent bonding is introduced.

Hereinafter, an example of the case where an unsaturated carboxylic acid or an unsaturated dicarboxylic anhydride is used as the acid modifier will be described.

In other words, the method of producing the block copolymer composition used in the present invention is a production method comprising a first step of reacting a block copolymer (A) including at least one aromatic vinyl polymer block and at least one conjugated diene polymer block with an unsaturated carboxylic acid or an unsaturated dicarboxylic anhydride to yield a modified block copolymer (C) into which a carboxyl group or an acid anhydride group is introduced; and a second step of subjecting the modified block copolymer (C) to a base treatment to yield a block copolymer (B) in which a functional group capable of noncovalent bonding is introduced.

The block copolymer (A) fed to the first step can be produced by a normal method. Living radical polymerization, living cationic polymerization, ring-opening metathesis polymerization, or the like may be used. Examples of the most common production method include a method of sequentially polymerizing an aromatic vinyl monomer and a conjugated diene monomer respectively by living anionic polymerization to form polymer blocks, and optionally coupling the polymer blocks by reacting the polymer blocks with a coupling agent.

When the block copolymer (A) is a mixture of two or more block copolymers, the mixture of block copolymers can be prepared by any method without limitation, and can be prepared by a traditional method of preparing block copolymers. For example, the mixture can be prepared by individually preparing two or more block copolymers, optionally compounding different polymer components and a variety of additives, and mixing these by a normal method such as kneading or solution mixing.

The method of preparing a mixture of block copolymers may be, for example, a method of preparing an aromatic vinyl-conjugated diene block copolymer a, and bonding an aromatic vinyl polymer block to part of terminals of the aromatic vinyl-conjugated diene block copolymer a to yield an aromatic vinyl-conjugated diene-aromatic vinyl block copolymer b, that is, a method of preparing two block copolymers at the same time. Specifically, see International Publication No. WO 2009/123089, Japanese Patent Application Laid-Open No. 2012-77158, and the like.

The resulting mixture of block copolymers may be processed into pellets or the like by a normal method before use.

In the first step, the block copolymer (A) is reacted with an unsaturated carboxylic acid or an unsaturated dicarboxylic anhydride to yield a modified block copolymer (C) in which a carboxyl group or an acid anhydride group is introduced. In other words, the block copolymer (A) is subjected to acid modification with an unsaturated carboxylic acid or an unsaturated dicarboxylic anhydride to yield a modified block copolymer (C). The acid modification may be performed one time or multiple times. When the acid modification is performed multiple times, the conditions for the respective acid modification operations may be the same or different.

Examples of the unsaturated carboxylic acid and unsaturated dicarboxylic anhydride used in the acid modification as the acid modifier include those listed above. These unsaturated carboxylic acids and unsaturated dicarboxylic anhydrides may be used alone or in combination.

The amount of the unsaturated carboxylic acid or the unsaturated dicarboxylic anhydride to be used is usually 0.01 to 200 parts by mass, preferably 0.05 to 100 parts by mass relative to 100 parts by mass of the block copolymer (A).

The reaction temperature for the acid modification can be usually within the range of 50 to 300°C. A significantly low reaction temperature may result in reduced reaction efficiency and thus increased contents of unreacted unsaturated carboxylic acid and unsaturated dicarboxylic anhydride in the modified block copolymer (C). The reaction time can be usually within the range of 5 minutes to 20 hours. A significantly short reaction time may result in reduced reaction efficiency and thus increased contents of unreacted unsaturated carboxylic acid and unsaturated dicarboxylic anhydride in the modified block copolymer (C).

The acid modification may be performed in the presence of a diluent, a gelation preventer, a reaction accelerator, and the like as needed.

The acid value of the modified block copolymer (C) is preferably 1.3 to 1050 KOHmg/g. Among these, the acid value is preferably 6.5 to 700 KOHmg/g. The acid value is a value obtained in measurement of the modified block copolymer (C) according to JIS K 0070, for example.

The introduction ratios of a carboxyl group and an acid anhydride group in the modified block copolymer (C)

can be within the range of 0.1 mol% or more and 75 mol% or less, preferably 0.5 mol% or more and 50 mol% or less in 100 mol% of conjugated diene monomer units in the modified block copolymer (C). The introduction ratios of a carboxyl group and an acid anhydride group can be calculated using $^1$H-NMR. Introduction of the carboxyl group and the acid anhydride group can be verified by $^1$H-NMR and/or infrared spectroscopy.

After the acid modification, preferably, unreacted unsaturated carboxylic acid and unsaturated dicarboxylic anhydride are removed.

In the second step, the modified block copolymer (C) is subjected to a base treatment to yield a block copolymer (B) in which a functional group capable of noncovalent bonding is introduced. The base treatment may be performed one time or multiple times. When the base treatment is performed multiple times, the conditions for the respective base treatment operations may be the same or different.

As the base used in the base treatment, those listed above can be used. These bases may be used alone or in combination.

The base treatment is varied according to kinds of the carboxyl group and the acid anhydride group introduced into the modified block copolymer (C), and kinds of the base. For example, when a carboxyl group or an acid anhydride group are introduced and ammonia, a primary amine compound, or a secondary amine compound is used as the base, in the base treatment, the carboxyl group or the acid anhydride group can be converted into a functional group capable of noncovalent bonding through a reaction with the base. In other words, in the base treatment in this case, the modified block copolymer (C) can be modified with amine. For example, when an acid anhydride group is introduced and an alkali metal-containing compound, an alkaline earth metal-containing compound, or a tertiary amine compound is used as the base, in the base treatment, the acid anhydride group can be converted into a functional group capable of noncovalent bonding through hydrolysis with the base.

The amount of the base to be used is appropriately selected according to the type of the base treatment. For example, in the base treatment, when the carboxyl group or the acid anhydride group is reacted with the base or the modification with amine is performed, the amount of the base to be used can be an equal or larger mole, specifically about 1-to 2-fold mole relative to the carboxyl group or acid anhydride group introduced into the modified block copolymer (C). For example, when the acid anhydride group is converted into a carboxyl group through hydrolysis with the base in the base treatment, the base can be used in any amount, and the amount of the base to be used is an equal or larger mole relative to the acid anhydride group introduced into the modified block copolymer (C) .

The base treatment may be performed in the absence of a solvent, and may be performed in a solvent. When the base treatment is performed in a solvent, examples of the solvent include $C_1$ to $C_2$ aliphatic halogenated hydrocarbons such as 1,2-dichloroethane, chloroform, dichloromethane, and 1,1-dichloroethane, aliphatic cyclic hydrocarbons such as cyclohexane, methylcyclohexane, and cyclopentane, nitromethane, nitrobenzene, acetonitrile, tetrahydrofuran, tetrahydropyran, 1,2-dimethoxyethane, acetone, methyl ethyl ketone, dimethyl sulfoxide, dimethylformamide, pyrrolidone, water, and the like. These solvents may be used alone or in the form of a mixture thereof.

The reaction temperature for the base treatment is, for example, 0 to 200°C, preferably 10 to 150°C, although it varies according to kinds of the carboxyl group and the acid anhydride group introduced into the modified block copolymer (C), and kinds of the base. A significantly low reaction temperature may result in a reduced reaction rate, and a significantly high reaction temperature may result in thermal decomposition of the modified block copolymer (C). The reaction time can be, for example, 1 minute to 40 hours, preferably 3 minutes to 2 hours, although it depends on the reaction temperature. A significantly short reaction time may result in insufficient progression of the reaction, and a significantly long reaction time may result in reduced reaction efficiency.

After the base treatment, the residual base is preferably removed. The method for removal is appropriately selected according to the type of the base treatment and the type of the base, and examples of the method include washing, neutralization, filtration, drying, and the like.

Alternatively, when an ionic group as the functional group capable of noncovalent bonding is formed using an unsaturated dicarboxylic anhydride as the acid modifier, for example, the block copolymer composition used in the present invention can be produced by the following production method.

That is, the block copolymer composition used in the present invention can be produced by a method comprising a third step of reacting the block copolymer (A) with an unsaturated dicarboxylic anhydride to yield a modified block copolymer (C') in which an acid anhydride group is introduced; a fourth step of subjecting the modified block copolymer (C') to a base treatment or a hydrolysis treatment to yield a modified block copolymer (C") in which a carboxyl group is introduced; and a fifth step of subjecting the modified block copolymer (C") to a base treatment to yield a block copolymer (B) in which an ionic group is introduced.

In the third step, the block copolymer (A) is reacted with an unsaturated dicarboxylic anhydride to yield a modified block copolymer (C') in which an acid anhydride group is introduced. In other words, the block copolymer (A) is subjected to acid modification with an unsaturated dicarboxylic anhydride to yield a modified block copolymer (C'). The acid modification may be performed one time or multiple times. When the acid modification is performed multiple times, the conditions for the respective acid modification operations may be the same or different.

The unsaturated dicarboxylic anhydride used in the acid modification as the acid modifier is as described above. These unsaturated dicarboxylic anhydrides may be used alone or in combination.

The amount of the unsaturated dicarboxylic anhydride to be used is usually 0.01 to 200 parts by mass, preferably 0.05 to 100 parts by mass relative to 100 parts by mass of the block copolymer (A).

The acid modification can be the same as that in the first step above. The acid value of the modified block copolymer (C') can be the same as that of the modified block copolymer (C) above.

The introduction ratio of the acid anhydride group in the modified block copolymer (C') can be, for example, 0.1 mol% to 50 mol%, and is preferably 0.5 mol% to 25 mol% or less in 100 mol% of conjugated diene monomer units in the modified block copolymer (C'). The introduction ratio of the acid anhydride group can be calculated using $^1$H-NMR. Introduction of the acid anhydride group can be verified by $^1$H-NMR and/or infrared spectroscopy.

After the acid modification, preferably, unreacted unsaturated dicarboxylic anhydride is removed.

In the fourth step, the modified block copolymer (C') is subjected to a base treatment or a hydrolysis treatment to yield a modified block copolymer (C") in which a carboxyl group is introduced. The base treatment may be performed one time or multiple times. When the base treatment is performed multiple times, the conditions for the respective base treatment operations may be the same or different.

As the base used in the base treatment, the second bases described above may be used. These second bases can be used alone or in combination.

In the base treatment, using the above-mentioned second base, the acid anhydride group and the second base can be reacted to form an amide group and a carboxyl group. In other words, in the base treatment in this case, the modified block copolymer (C') can be modified with amine.

The amount of the second base to be used is appropriately selected according to the type of the base treatment. For example, when modification with amine is performed, the amount of the second base to be used can be an equal or smaller mole, specifically about 0.01- to 1-fold mole relative to the acid anhydride group introduced into the modified block copolymer (C').

The base treatment may be performed in the absence of a solvent, or may be performed in a solvent. When the base treatment is performed in a solvent, examples of the solvent include $C_1$ to $C_2$ aliphatic halogenated hydrocarbons such as 1,2-dichloroethane, chloroform, dichloromethane, and 1,1-dichloroethane, aliphatic cyclic hydrocarbons such as cyclohexane, methylcyclohexane, and cyclopentane, nitromethane, nitrobenzene, acetonitrile, tetrahydrofuran, tetrahydropyran, 1,2-dimethoxyethane, acetone, methyl ethyl ketone, dimethyl sulfoxide, dimethylformamide, pyrrolidone, water, and the like. These solvents may be used alone or in combination.

In the hydrolysis treatment, the acid anhydride group can be converted into a carboxyl group through hydrolysis.

In the hydrolysis treatment, hydrolysis may be performed on a basic condition. For the basic condition, examples of the base to be used include at least one compound selected from the group consisting of alkali metal-containing compounds, alkaline earth metal-containing compounds, and tertiary amine compounds. Examples of the alkali metal-containing compounds include oxides, hydroxides, carbonates, hydrogencarbonates, acetates, sulfates, and phosphates of alkali metals such as sodium, lithium, and potassium. Examples of the alkaline earth metal-containing compounds include oxides, hydroxides, carbonates, hydrogencarbonates, acetates, sulfates, and phosphates of alkaline earth metals such as magnesium and calcium.

The amount of the base to be used is not particularly limited, and the amount can be, for example, an equal or smaller mole relative to the acid anhydride group introduced into the modified block copolymer (C').

The reaction temperature for the base treatment and the hydrolysis treatment can be, for example, 0 to 200°C, preferably 10 to 150°C, although it varies according to kinds of the acid anhydride group introduced into the modified block copolymer (C') and kinds of the second base. A significantly low reaction temperature may result in a reduced reaction rate, and a significantly high reaction temperature may result in thermal decomposition of the modified block copolymer (C'). The reaction time can be, for example, 1 minute to 40 hours, preferably 3 minutes to 2 hours, although it varies according to the reaction temperature. A significantly short reaction time may result in insufficient progression of the reaction, and a significantly long reaction time may result in reduced reaction efficiency.

After the base treatment and the hydrolysis treatment, preferably, the residual second base and the residual base above are removed. The method for removal is appropriately selected according to kinds of the base treatment, the second base, and the base above, and examples of the method include washing, neutralization, filtration, drying, and the like.

In the fifth step, the modified block copolymer (C") is subjected to a base treatment to yield a block copolymer (B) in which an ionic group is introduced. The fifth step can be the same as in the second step.

<Thermoplastic elastomer composition for impact-resistant material>

The thermoplastic elastomer composition for an impact-resistant material according to the present invention is a thermoplastic elastomer composition comprising the above-mentioned block copolymer composition, and is used in

applications to impact-resistant materials.

Although the thermoplastic elastomer composition for an impact-resistant material according to the present invention may contain only the above-described block copolymer composition, preferably, the thermoplastic elastomer composition for an impact-resistant material according to the present invention also contains a different polymer other than the polymer(s) constituting the block copolymer composition because the impact resistance can be further improved.

Examples of such a different polymer include, but should not be limited to, acrylic polymers such as polymethyl methacrylate, polycarbonate resins, poly(4-sodium styrenesulfonate), polystyrene resins, styrene-maleimide copolymers, styrene-N-phenylmaleimide-methyl methacrylate copolymers, rubber-reinforced impact-resistant polystyrene, acrylonitrile-styrene copolymers, ABS copolymer resins, methyl methacrylate resins, and the like. Among these, preferred is at least one member selected from the group consisting of acrylic polymers, polycarbonate resins, and poly(4-sodium styrenesulfonate) because these have a high effect of improving impact resistance. These different polymers can be used alone or in combination.

Although the content of the different polymer in the thermoplastic elastomer composition for an impact-resistant material according to the present invention is not particularly limited, for the content of the different polymer relative to the total content of the block copolymer (A) and the block copolymer (B) contained in the block copolymer composition, the mass ratio of "total of block copolymer (A) and block copolymer (B):different polymer" is preferably 80:20 to 100:0, more preferably 90:10 to 100:0, still more preferably 95:5 to 100:0, further still more preferably 95:5 to 99:1. Control of the content of the different polymer within these ranges can further enhance the impact resistance improving effect.

Moreover, the thermoplastic elastomer composition for an impact-resistant material according to the present invention may contain polyethylene wax as needed. The polyethylene wax is a wax including ethylene monomer units as the main constitutional units. Although the polyethylene wax used in the present invention is not particularly limited, a polyethylene wax having a viscosity at 140°C of 20 to 6,000 mPa·s is preferably used.

The polyethylene wax is usually produced by polymerization of ethylene or decomposition of polyethylene, and any one of types of polyethylene wax may be used in the present invention. For the polyethylene wax, commercial products are also available. Specific examples thereof include "A-C Polyethylene" (available from Honeywell International Inc.), "Mitsui Hi Wax" (available from Mitsui Chemicals, Inc.), "Sanwax" (available from Sanyo Chemical Industries, Ltd.), and "Epolene" (available from Eastman Chemical Company). These waxes may be modified (functionalized).

The thermoplastic elastomer composition for an impact-resistant material according to the present invention can contain an antioxidant as needed. Any antioxidant can be used without limitation, and hindered phenol compounds such as pentaerythritol tetrakis[3-(3,5-di-t-butyl-4-hydroxyphenyl)propionate], octadecyl-3-(3,5-di-t-butyl-4-hydroxyphenyl)propionate, 2,6-di-t-butyl-p-cresol, and di-t-butyl-4-methylphenol; thiodicarboxylate esters such as dilaurylthiopropionate; and phosphorous acid salts such as tris(nonylphenyl)phosphite can be used, for example. These antioxidants may be used alone or in combination.

Although not particularly limited, the content of the antioxidant is usually 10 parts by mass or less, preferably 0.01 to 5 parts by mass relative to 100 parts by mass of the polymer components in the thermoplastic elastomer composition for an impact-resistant material.

Moreover, the thermoplastic elastomer composition for an impact-resistant material according to the present invention can further contain a tackifying resin, a softening agent, an antibacterial agent, a photostabilizer, an ultraviolet absorbing agent, a dye, a fatty acid monoamide, and a lubricant other than the polyethylene wax as needed.

In preparation of the thermoplastic elastomer composition for an impact-resistant material according to the present invention, the block copolymer composition and other components such as the different polymer can be mixed by any method. Examples of the method include a method of dissolving the components in a solvent, homogeneously mixing these, and then removing the solvent by heating or the like; and a method of melt mixing the components with a screw extruder, a kneader, or the like. Among these, suitable is melt mixing from the viewpoint of efficient mixing. The temperature for melt mixing is usually within the range of 100 to 200°C, but not limited thereto.

The thermoplastic elastomer composition for an impact-resistant material according to the present invention has high tensile strength, high tensile strength at a low elongation rate, and high fatigue resistance, as well as high impact resistance. For example, it is preferred that the thermoplastic elastomer composition for an impact-resistant material according to the present invention be not broken even under application of an impact energy of 2.4 J on the condition described in Examples, it is more preferred that the thermoplastic elastomer composition be not broken even under application of an impact energy of 3.6 J, it is still more preferred that the thermoplastic elastomer composition be not broken even under application of an impact energy of 4.2 J, and it is particularly preferred that the thermoplastic elastomer composition be not broken even under application of an impact energy of 10 J. For this reason, the thermoplastic elastomer composition for an impact-resistant material according to the present invention is suitably used as an impact-resistant material requiring impact resistance. Such an impact-resistant material can be suitably used in a variety of applications requiring impact resistance, such as automobile materials (such as bumpers, instrument panels, and body panels), home appliances, office apparatus materials, packaging materials, housing materials, tools, medical products, sundry goods, and products for daily use.

EXAMPLES

Hereinafter, the present invention will be more specifically described by way of Examples and Comparative Examples, but the present invention will not be limited only to these Examples. To be noted, "parts" and "%" are mass-based unless otherwise specified.

[Example 1]

In Example 1, Quintac (registered trademark) 3440 (available from ZEON Corporation, polystyrene-polyisoprene block copolymer composition) was used as a block copolymer composition serving as a base polymer. According to the scheme shown below, Quintac 3440 was subjected to an addition reaction with maleic anhydride to introduce a succinic anhydride unit (introduction ratio: 7.8 mol%). Subsequently, the product was subjected to a modification process with amine to synthesize a block copolymer composition in which functional groups capable of noncovalent bonding (a carboxy group and an amide group as functional groups capable of noncovalent bonding) were introduced. The mechanical properties thereof were evaluated. Quintac 3440 is a polystyrene-polyisoprene block copolymer composition including a polystyrene-b-polyisoprene-b-polystyrene triblock copolymer as the main component. A specific procedure will be shown below.

[Chem. 1]

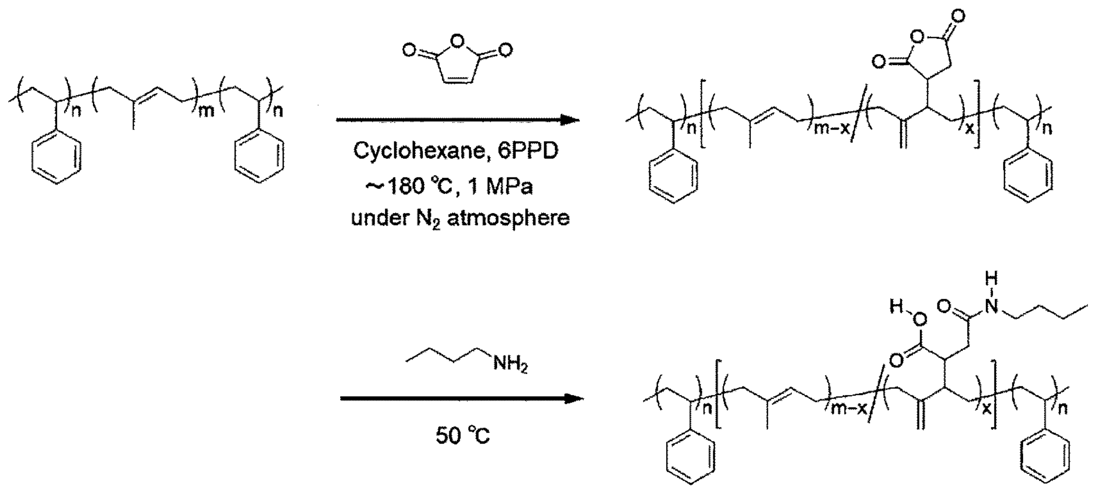


[1-1] First step (introduction of succinic anhydride unit)

300 g of a block copolymer composition (Quintac 3440) as a base polymer, 112.5 g of maleic anhydride, and 0.5 g of N-(1,3-dimethylbutyl)-N'-phenyl-1,4-phenylenediamine (hereinafter, referred to as "6PPD") as an anti-aging agent were weighed, and were placed into a pressure vessel (inner temperature: 72°C) preliminarily heated with a mantle heater. The vessel was closed with a lid equipped with a mechanical stirrer. 900 g of cyclohexane as a solvent was transferred into a pressure vessel by pneumatic transportation with nitrogen gas. Under stirring at 50 rpm, the temperature of the mantle heater was set such that the inner temperature of the pressure vessel was about 180°C. After 1.75 hours, the inner temperature reached 175°C and the internal pressure reached 1 MPa; thereafter, a reaction was performed for 1.5 hours, and then the pressure vessel was cooled in an ice bath to stop the reaction. When the inner temperature of the pressure vessel lowered to about 50°C, nitrogen in the vessel was purged, and a small amount of the reaction solution was extracted for analysis.

Toluene was added to the small amount of the solution extracted for analysis, and the resulting solution was added dropwise to acetonitrile to precipitate a succinic anhydride-modified block copolymer composition (block copolymer composition in which the succinic anhydride unit was introduced) by reprecipitation. The resulting succinic anhydride-modified block copolymer composition was separated by decantation, was sufficiently dried by vacuum drying, again was dissolved in toluene, and was added dropwise to acetonitrile to precipitate a succinic anhydride-modified block copolymer composition. Similarly, the resulting succinic anhydride-modified block copolymer composition was separated by decantation, and was sufficiently dried by vacuum drying. Through this step, unreacted maleic anhydride and cyclohexane as the solvent were removed. In the resulting succinic anhydride-modified block copolymer composition, the

introduction ratio (reaction ratio) of the succinic anhydride unit into the polyisoprene block was measured by proton nuclear magnetic resonance ($^1$H-NMR) spectroscopy. The introduction ratio of the succinic anhydride unit was 7.8 mol%. The block copolymer composition before modification with succinic anhydride and that after modification with succinic anhydride were dissolved in tetrahydrofuran (hereinafter, referred to "THF") to prepare about 0.1% solutions thereof, and it was confirmed by gel permeation chromatography (GPC) whether the polymer was decomposed or not. In the block copolymer composition (Quintac 3440) before modification with succinic anhydride, only the peaks derived from the triblock copolymer were observed. In the block copolymer composition after modification with succinic anhydride, peaks shifted to a slightly lower elution time from the peak positions derived from the triblock copolymer before modification were observed, and the triblock copolymer hardly decomposed during the reaction. It is considered that the peak shift occurred due to an increase in apparent molecular weight caused by introduction of the succinic anhydride unit through modification with succinic anhydride.

[1-2] Second step (addition of amine)

It is considered that the reaction solution prepared in the first step contained the succinic anhydride-modified block copolymer composition and unreacted maleic anhydride, and these acid anhydrides have high reactivity and react with a monoamine compound to form a carboxy group and an amide group. A substantially equimolar amount of n-butylamine (84 g) relative to maleic anhydride used was added to the reaction solution prepared in the first step, and a reaction was performed by stirring at 50°C and 300 rpm overnight. The reaction solution was extracted by pneumatic transportation with nitrogen gas, and cyclohexane as the solvent was evaporated by air drying. The resulting crude product was preserved in a freezer at -85°C. In the next step, 30 g of the crude product was dissolved in 450 mL of THF, and was added dropwise to 2200 mL of methanol to precipitate a block copolymer composition (amine-modified block copolymer composition) in which functional groups capable of noncovalent bonding (a carboxy group and an amide group) were introduced, by reprecipitation. The resulting amine-modified block copolymer composition was separated by decantation, and was sufficiently dried by vacuum drying. Again, the same operation was performed to remove impurities formed by the reaction between unreacted maleic anhydride and n-butylamine and cyclohexane as the solvent. 8.00 g of the purified sample of 8.00 g was dissolved in 80.0 g of THF to prepare a solution. To the solution, 0.1% of Irgafos (registered trademark) 168 (available from BASF SE) and 0.07% of Irganox (registered trademark) 565 (available from BASF SE) as anti-aging agents relative to the obtained amine-modified block copolymer composition were further added and dissolved. Subsequently, the resulting solution was transferred to a vessel (inner size: 128 $\times$ 94 $\times$ 23 mm) made of polyperfluoroalkoxyalkane (hereinafter, referred to as "PFA"), and was left to stand on a hot plate at 45°C for 1.5 days, thereby evaporating the THF solvent. Subsequently, the product was dried with a vacuum dryer for about one day to completely remove the solvent. Thus, a membrane of an amine-modified block copolymer composition was prepared.

The resulting membrane of the amine-modified block copolymer composition was dissolved in deuterated chloroform to prepare an about 2% solution, which was subjected to $^1$H-NMR measurement. The peak intensities derived from the protons of a methylene group adjacent to an nitrogen atom of an amide group were observed at 3.0 to 3.3 ppm. From this, it was verified that the block copolymer composition was modified with amine.

[2-1] Tensile test

A monoaxial tensile test was performed to evaluate simple tensile properties and their initial strain rate dependency. Specifically, the resulting membrane-like sample of the amine-modified block copolymer composition was punched out with a punching mold corresponding to a dumbbell shape #7 (corresponding to Type 4 in International Organization for Standardization ISO 37:2017) specified by Japanese Industrial Standards JIS K6251:2017 to prepare a test piece. The test piece had a thickness of about 0.5 mm. Using a measurement apparatus AGS-X available from SHIMADZU Corporation, a 50-N load cell, and pneumatic flat grips, the tensile test was performed at an air pressure of the grips of 0.45 MPa, room temperature, a distance between the grips of 10.1 mm, and an initial strain rate of 1.0/s (tensile rate: 10 mm/s). The result of the tensile test is represented by the solid line in the stress-strain curve in Fig. 1. The Young's modulus was 1.3 MPa, the tensile strength was 17.0 MPa, the elongation at break was 3170%, and the inner area value (an index indicating the toughness of the material) in the stress-strain curve was 174 MJ/m$^3$. The Young's modulus was determined from the initial gradient (strain: 10% or less) in the stress-strain curve, the maximum stress was determined from the maximum value of stress, and the elongation at break was determined from the elongation when breakage occurred. A tensile test was performed in the same manner as above at an initial strain rate of 0.10/s (tensile rate: 1.0 mm/s), and the result represented by the dashed line in Fig. 1 was obtained. The Young's modulus was 1.3 MPa, the tensile strength was 12.2 MPa, the elongation at break was 3130%, and the inner area value in the stress-strain curve was 134 MJ/m$^3$. A tensile test was performed at an initial strain rate of 0.010/s (tensile rate: 0.10 mm/s), and the result represented by the dotted line in Fig. 1 was obtained. The Young's modulus was 1.3 MPa, the maximum stress was 8.2

MPa, the elongation at break was 3210%, and the inner area value in the stress-strain curve was 110 $MJ/m^3$. As above, as the tensile rate was lower, the tensile strength was slightly decreased depending on the tensile rate while the elongation at break hardly changed. The results in the tensile tests in Examples 1 and 2 described later as well as Examples 3 to 11 described later show high tensile properties such as elongation at break.

[2-2] Stress relaxation test

A stress relaxation test was performed to evaluate mechanical properties when a constant strain was applied for a long time. Similarly to [2-1] Tensile test above, a membrane-like sample of the amine-modified block copolymer composition was punched out with a punching mold to prepare a test piece. The test piece had a thickness of about 0.57 mm. The same measurement apparatus as that in the tensile test was used, and the stress relaxation test was performed at an air pressure of the grips of 0.45 MPa, room temperature, a distance between the grips of 10.0 mm, an initial strain rate of 1.5/s (tensile rate: 15 mm/s), and a strain of 1000% for 50 hours. The result of the test is shown in Fig. 2. The stress immediately after the strain reached 1000% was 2.8 MPa. Thereafter, the stress drastically decreased to about 2.0 MPa in 1 minute. The stress gradually decreased, and the stress after 24 hours had passed and that after 50 hours had passed were 1.3 MPa and 1.0 MPa, respectively. Breakage did not occur within 50 hours.

[2-3] Cycle tensile test (3 cycles)

A cycle tensile test was performed to evaluate the effects of dissociation and recombination of the noncovalent bond when strain was repeatedly applied. A test piece was prepared in the same manner as in [2-1] Tensile test above, and the same measurement apparatus as in [2-1] Tensile test was used. The conditions for measurement were an air pressure of the grips of 0.45 MPa, room temperature, and a distance between the grips of 10.0 mm. A strain of 1000% was applied at an initial strain rate of 1.5/s (tensile rate: 15 mm/s), followed by returning to the original distance between the grips (strain of 0%) at the same rate. Three cycles of the operation were repeated. Fig. 3 shows a graph showing the level of strain versus time in the cycle tensile test, and Fig. 4 shows the stress-strain curve obtained in the cycle tensile test. In Fig. 4, the result of the first cycle is represented by the dotted line, that of the second cycle is represented by the dashed line, and that of the third cycle is represented by the solid line. The value of the hysteresis area (area surrounded by the corresponding stress-strain curve) was 6.1 $MJ/m^3$ in the first cycle, 1.6 $MJ/m^3$ in the second cycle, and 1.3 $MJ/m^3$ in the third cycle. It is considered that a large hysteresis area in the first cycle was due to influences of dissociation of hydrogen bonds and rearrangement of polystyrene domains. It is considered that the hysteresis area in the second cycle and that in the third cycle were substantially the same because the degrees of dissociation and recombination of the hydrogen bond were substantially the same in these cycles.

[2-4] Cycle tensile test (until test piece was broken)

A fatigue test was performed by repeating the cycle test in [2-3] till breakage of the test piece. The test piece was broken in the 6140th cycle.

[2-5] Drop weight impact test (impact absorbing properties and impact resistance)

A drop weight impact test was performed to evaluate impact absorbing properties and impact resistance. A membrane-like sample of the amine-modified block copolymer composition was cut into pieces of an appropriate size. These pieces were laminated, and were hot pressed at 120°C for about 2 minutes while nitrogen gas was flowing. This step was repeated three times to prepare a uniform sample having a thickness of 3.7 mm. The resulting sample was punched out with a 25 mmϕ punch to prepare a test piece for a drop weight impact test. Using a measurement apparatus IM1C-15 available from IMATEK, an iron plate having a length of 150 mm, a width of 100 mm, and a height of 10 mm was set inside the apparatus. The test piece was placed thereon, and was fixed with a masking tape. A striker having a diameter of 16 mmϕ was used as a striker for contacting the sample, and the mass (m) of the drop weight including the striker was 2.709 kg. The test was performed at a temperature of 23°C and a humidity of 50 %RH. A variety of levels of impact energy E were applied to the test piece by varying the height h from which the weight was dropped. Based on potential energy and kinetic energy according to the law of the conservation of energy, the impact energy $E_I$ to be applied can be roughly calculated from the following equation (1):
[Equation 1]

$$E_I = mgh - \Delta \approx mgh = \frac{1}{2}mv^2 \quad (1)$$

Here, g, Δ, and v indicate the gravitational acceleration (9.81 $m/s^2$), the loss energy caused by friction in the apparatus, air resistance, and the like, and the falling rate immediately before the striker collides with the sample, respectively. Moreover, h indicates the height of the drop weight (the distance between the drop weight and the test piece). Fig. 5 shows a graph (hereinafter, referred to as energy-time curve) where at $E_I$ = 2.46 J (h = 10.0 cm), the energy amount applied to the sample is plotted against the time which passed from collision of the striker with the sample. In this graph, the maximum value corresponds to the impact energy $E_I$, and the energy value in the substantially flat region after the time of the maximum value corresponds to the energy absorbed by the sample (hereinafter, referred to as $E_A$). When the ratio of these is defined as energy absorption ratio (hereinafter, referred to as r), r = $E_A/E_I$. When $E_I$ was 2.46 J (h = 10.0 cm), $E_A$ was 1.98 J and r was 0.805 (Fig. 6). Fig. 7 also shows the energy-time curves when different levels of $E_I$ were applied in the range in which the test piece was not broken, that is, when the height h was varied. In Fig. 7, the result at a height of 10.0 cm is represented by the solid line, the result at a height of 15.0 cm is represented by the dashed line, and the result at a height of 17.5 cm is represented by the dotted line. Table 1 collectively shows $E_A$ and r when different levels of $E_I$ were applied (namely, when h was varied).

Because the test piece is broken (cracked) by large $E_I$ applied, the degree of impact energy which the sample can withstand (impact resistance) was also evaluated. Fig. 8 shows the relation between the applied impact energy $E_I$ and whether the test piece is broken or not. In Fig. 8, a bar chart shows the impact energy in the range in which breakage was not observed, and the tests actually performed are represented by hollow circles. In Fig. 8, × represents the impact energy at which breakage was observed. While breakage of the test piece was not observed at $E_I \leq 4.38$ J (h ≤ 17.5 cm), the test piece was radially cracked and broken at $E_I$ = 5.10 J (h = 20.0 cm).

To examine whether repeated application of impact causes cracks in the stand under the test piece (here, referred to as repeated impact resistance), a glass fiber-reinforced plastic (GFRP) plate (length: 50 mm, width: 100 mm, thickness: 4.2 mm, RYODEN KASEI CO., LTD., Product No. PGE-6635, resin component: epoxy resin cured product, glass component: alumina borosilicate glass) was set, and the test piece was placed thereon. An impact with $E_I$ of about 4.8 J (h = 20.0 cm) was applied to the test piece at an interval of 1.5 minutes several times. No cracks were caused in the GFRP plate under the test piece till the third impact, and cracks were caused on the fourth impact.

[Comparative Example 1]

In Comparative Example 1, the mechanical properties of the block copolymer composition (Quintac 3440) as the base polymer were evaluated. A membrane-like sample of the block copolymer composition to be measured was prepared as in Example 1.

[1-1] Tensile test

A monoaxial tensile test was performed in the same manner as in Example 1 to evaluate simple tensile properties and their initial strain rate dependency. A tensile test was performed at an initial strain rate of 1.0/s (tensile rate: 10 mm/s), and the result represented by the solid line in Fig. 9 was obtained. The Young's modulus, the tensile strength, the elongation at break, and the inner area value in the stress-strain curve were 2.5 MPa, 19.3 MPa, 3150%, and 192 $MJ/m^3$, respectively. A tensile test was performed in the same manner as above at an initial strain rate of 0.10/s (tensile rate: 1.0 mm/s), and the result represented by the dashed line in Fig. 9 was obtained. The Young's modulus, the tensile strength, the elongation at break, and the inner area value in the stress-strain curve were 2.7 MPa, 8.9 MPa, 2930%, and 111 $MJ/m^3$, respectively. A tensile test was performed at an initial strain rate of 0.010/s (tensile rate: 0.10 mm/s), and the result represented by the dotted line in Fig. 9 was obtained. The Young's modulus, the maximum stress, the elongation at break, and the inner area value in the stress-strain curve were 2.1 MPa, 5.1 MPa, 2260%, and 62 $MJ/m^3$, respectively. As above, as the tensile rate was lower, decreased tensile strength and decreased elongation at break were observed. At the initial strain rates of 0.10/s and 0.010/s, the elongation at break was smaller than that in Example 1, and thus the inner area value was also smaller.

[1-2] Stress relaxation test

A stress relaxation test was performed in the same manner as in Example 1. As shown in Fig. 2, in Comparative Example 1, the stress immediately after the strain reached 1000% was 2.9 MPa, and thereafter, the stress decreased to about 2.4 MPa in 1 minute. It is considered that polystyrene chains were pulled out of domains as a result of continuous

application of stress, and thus the stress was gradually decreased, finally resulting in breakage. In contrast, the sample in Example 1 having the functional groups capable of hydrogen bonding was not broken even after 50 hours had passed because stress was dispersed due to repeated dissociation and recombination of hydrogen bonds with a lapse of time to suppress pulling out of polystyrene chains from domains.

[1-3] Cycle tensile test (3 cycles)

A cycle tensile test (3 cycles) was performed in the same manner as in Example 1. Fig. 10 shows the result in the cycle tensile test in Comparative Example 1. It is considered that a large hysteresis area (5.8 $MJ/m^3$) in the first cycle was due to influences by rearrangement of polystyrene domains as in Example 1. The values of the hysteresis areas in the second cycle and the third cycle were 0.42 $MJ/m^3$ and 0.31 $MJ/m^3$, respectively, while the sample in Example 1 having the functional groups capable of hydrogen bonding had larger hysteresis areas in the second cycle and the third cycle. This suggests that larger stress was dispersed in the sample in Example 1 due to dissociation of hydrogen bonds at elongation.

[1-4] Cycle tensile test (until test piece was broken)

A cycle tensile test was repeated in the same manner as in Example 1 until the test piece was broken, and the test piece was broken in the 931st cycle. The number of cycles till breakage of the test piece was significantly larger in the sample in Example 1 in which the functional groups capable of hydrogen bonding were introduced. This shows that introduction of the functional groups capable of hydrogen bonding improved fatigue properties. The following reason for this is considered: In the sample in Comparative Example 1, polystyrene chains were pulled out of domains as a result of repeated elongation, finally resulting in breakage; in contrast, in the sample in Example 1 allowing formation of hydrogen bonds, stress was dispersed by dissociation and recombination of hydrogen bonds to suppress pulling out of polystyrene chains.

[1-5] Drop weight impact test (impact absorbing properties and impact resistance)

A test piece having a thickness of 4.0 mm was prepared in the same manner as in Example 1, and was subjected to a drop weight impact test. Fig. 5 shows the energy-time curve at $E_I$ = 1.23 J (h = 5.0 cm). As shown in Fig. 6 and Table 1, at this time, $E_A$ was 0.65 J and r was 0.53, and the sample in Example 1 in which the functional groups capable of hydrogen bonding were introduced had a higher energy absorption ratio. It is considered that this is because impact energy is dispersed due to dissociation of hydrogen bonds when an impact is applied to the test piece.

The impact resistance was also evaluated in the same manner as in Example 1. Fig. 8 shows the result of measurement. While breakage of the test pieces was not observed at $E_I$ = 1.23 J (h = 5.0 cm), the test piece was radially cracked and broken at $E_I$ = 1.89 J (h = 7.5 cm). The sample in Example 1 in which the functional groups capable of hydrogen bonding were introduced had higher impact resistance. It is considered that this is because impact energy is dispersed due to dissociation of hydrogen bonds when an impact is applied to the test piece. As above, comparison to the sample in Comparative Example 1 before introduction of a functional group capable of hydrogen bonding shows that the sample in Example 1 in which the functional groups capable of hydrogen bonding were introduced had improved stress relaxation properties, improved fatigue resistance, improved impact absorbing properties, and improved impact resistance.

To examine repeated impact resistance, as in Example 1, the test piece was placed on a GFRP plate, and an impact with $E_I$ of about 2.4 J (h = 10.0 cm) was applied to the test piece at an interval of 1.5 minutes several times. No cracks were caused in the GFRP plate under the test piece till the fourth impact, and cracks were caused on the fifth impact.

[Example 2]

In Example 2, the block copolymer composition in which a carboxy group and an amide group were introduced as functional groups capable of noncovalent bonding (introduction ratio of the succinic anhydride unit: 7.8 mol%) synthesized in Example 1 was used, and as shown in the scheme below, the carboxy group of the functional groups capable of noncovalent bonding was neutralized with sodium methoxide to form a salt of a carboxylate anion and a sodium cation. Thus, a block copolymer composition enabling formation of an ionic bond was prepared, and the mechanical properties were evaluated. A specific procedure will be shown below.

[Chem. 2]

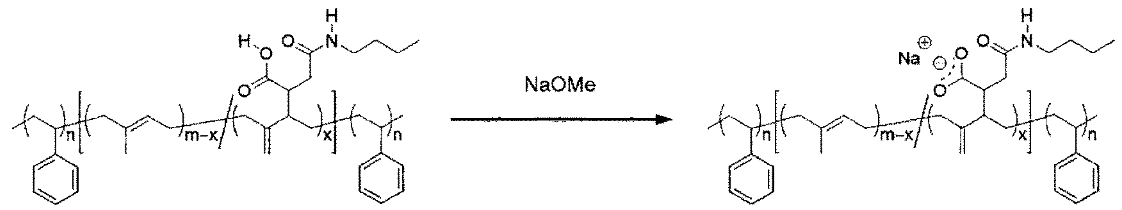


[1] Neutralization of carboxy group with base (introduction of ionic functional group)

5.01 g of the block copolymer composition in which a carboxy group and an amide group were introduced as functional groups capable of noncovalent bonding, which was synthesized in Example 1, was dissolved in 40 g of THF, and 0.1% of Irgafos 168 and 0.07% of Irganox 565 as anti-aging agents relative to the polymer were dissolved. Furthermore, 0.84 mL of a methanol solution of sodium methoxide (concentration: 5 mol/L) was added, and was reacted with the carboxy group. At this time, a substantially equimolar amount of sodium methoxide relative to the carboxy group was added. The resulting solution was transferred to a PFA vessel (inner size: 98 × 70 × 24 mm), and was left to stand on a hot plate at 50°C for 1.5 days to evaporate the THF solvent. Subsequently, the product was dried with a vacuum dryer for about one day to completely remove the solvent. A membrane-like sample of an ionic group-containing block copolymer composition was prepared. The introduction ratio of the ionic group (=(introduction ratio of succinic anhydride unit) × (molar percentage of sodium methoxide used relative to carboxy group)) was 7.8 mol%.

[2-1] Tensile test

A monoaxial tensile test was performed in the same manner as in Example 1. A tensile test was performed at an initial strain rate of 1.0/s (tensile rate: 10 mm/s), and the result represented by the solid line in Fig. 11 was obtained. The Young's modulus, the tensile strength, the elongation at break, and the inner area value in the stress-strain curve were 9.0 MPa, 45.0 MPa, 2560%, and 532 $MJ/m^3$, respectively. In the same manner as above, a tensile test was performed at an initial strain rate of 0.10/s (tensile rate: 1.0 mm/s), and the result represented by the dashed line in Fig. 11 was obtained. The Young's modulus, the tensile strength, the elongation at break, and the inner area value in the stress-strain curve were 8.8 MPa, 42.3 MPa, 2700%, and 479 $MJ/m^3$, respectively. Compared to the results at an initial strain rate of 1.0/s, the tensile strength was slightly decreased while the elongation at break was slightly increased. A tensile test was performed at an initial strain rate of 0.010/s (tensile rate: 0.10 mm/s), and the result represented by the dotted line in Fig. 11 was obtained. The Young's modulus, the maximum stress, the elongation at break, and the inner area value in the stress-strain curve were 5.7 MPa, 26.9 MPa, 2900%, and 326 $MJ/m^3$, respectively. The tensile strength was decreased while the elongation at break was slightly increased. The elongation at break decreases at a higher initial strain rate, and the following reason for this is considered: The ionic bond, which is an isotropic strong bond, is not sufficiently dissociated at a high elongation rate, and concentration of stress on domains containing polystyrene chains is not sufficiently suppressed. At all of the initial strain rates, the Young's modulus was higher, the tensile strength was significantly higher, and the inner area value was significantly larger than those of Example 1 and Comparative Example 1. As shown in the following document, Li et al. synthesized a polyurethane elastomer having a urethane bond, a urea bond, and a 2-ureido-4[1H]-pyrimidinone (UPy) group as functional groups having different strengths of hydrogen bonds, prepared a dumbbell-shaped test piece (the entire length: 25 mm, width: 3 mm), and performed a tensile test at a distance between jigs of 4 mm and an initial strain rate of 0.42/s (tensile rate: 1.7 mm/s). Although the resulting elastomer had a significantly large inner area value of 386 $MJ/m^3$, the elastomers prepared in Examples had a larger inner area value. It is considered that significantly high stress was demonstrated because the ionic bond is an isotropic strong bond compared to the hydrogen bond having a relatively weak bonding strength (for example, Y. Song, Y. Liu, T. Qi, G. L. Li, Angew, Chemie Int. Ed., 57, 13838-13838 (2018).).

[2-2] Cycle tensile test (3 cycles)

A cycle tensile test (3 cycles) was performed in the same manner as in Example 1. Fig. 12 shows the result in the cycle tensile test in Example 2. It is considered that a large hysteresis area (35.6 $MJ/m^3$) in the first cycle was due to influences by dissociation of the noncovalent bond and rearrangement of polystyrene domains as in Example 1. The hysteresis area value was 8.8 $MJ/m^3$ in the second cycle and 6.9 $MJ/m^3$ in the third cycle, which were larger than those of the sample in Example 1 having the functional groups capable of hydrogen bonding and those of the sample in Comparative Example 1 without a functional group capable of noncovalent bonding. The results suggest that the stress

dispersing effect caused by dissociation of the ionic bonds during elongation is higher than that caused by the hydrogen bond.

[2-3] Cycle tensile test (until test piece was broken)

A cycle tensile test was repeated in the same manner as in Example 1 until a test piece was broken, and the test piece was broken at the 1600th cycle. The number of cycles till breakage of the sample was smaller than that in the sample in Example 1 in which the functional groups capable of hydrogen bonding were introduced, whereas the number was larger than that in the sample in Comparative Example 1 without a functional group capable of noncovalent bonding. The reason for this is considered as follows: Although dissociation and recombination also occur in ionic bonds and the stress repeatedly applied to polystyrene domains can be dispersed to some extent, the stress applied to domains cannot be sufficiently dispersed due to slower dissociation and recombination of ionic bonds than those of hydrogen bonds.

[2-4] Drop weight impact test (impact absorbing properties and impact resistance)

A test piece having a thickness of 4.3 mm was prepared in the same manner as in Example 1, and was subjected to a drop weight impact test in the same manner as in Example 1. Fig. 5 shows the energy-time curve at $E_I$ = 2.48 J (h = 10.0 cm). As shown in Fig. 6 and Table 1, at this time, $E_A$ was 1.73 J and r was 0.698, and r was smaller than that of the sample in Example 1 in which the functional groups capable of hydrogen bonding were introduced, whereas r was significantly larger than that of the sample in Comparative Example 1 without a functional group capable of noncovalent bonding. The reason for this is considered as follows: Although even ionic bonds are dissociated under application of an impact to disperse energy, the impact is relaxed in a shorter time in hydrogen bonds than in ionic bonds; for this reason, the sample in Example 1 had a higher energy absorption ratio. Fig. 13 shows the energy-time curve when different levels of $E_I$ were applied in Example 2 in the range in which breakage of the test piece was not observed. Table 1 shows $E_A$ and r when different levels of $E_I$ were applied.

The impact resistance was also evaluated in the same manner as in Example 1. The result of measurement is shown in Fig. 8. While breakage of the test pieces was not observed at $E_I \leq 12.8$ J (h $\leq$ 50.0 cm), the test piece was radially cracked and broken at $E_I$ = 14.2 J (h = 55.0 cm). Compared to Comparative Example 1 before introduction of an ionic bonding functional group, higher impact resistance was demonstrated in spite of substantially equal membrane thicknesses of the test pieces. It is considered that this is because impact energy is dispersed by dissociation of the ionic bonds when an impact is applied to the test piece. Compared to Example 1 in which the functional groups capable of hydrogen bonding were introduced, higher impact resistance was demonstrated in spite of lower impact absorbing properties because in addition to dissociation of ionic bonds, the bonding strength of the ionic bond significantly stronger than that of the hydrogen bond provided such increased hardness and toughness of the sample. As above, while the sample in Example 2 in which the ionic bonding functional group (functional group capable of ionic bonding) was introduced exhibited smaller degrees of improvement in fatigue resistance and impact absorbing properties than those of the sample in Example 1 in which the functional groups capable of hydrogen bonding were introduced, the sample in Example 2 demonstrated improved fatigue resistance and improved impact absorbing properties compared to those of Comparative Example 1 before introduction of an ionic bonding functional group, and particularly demonstrated a significant improvement in simple tensile properties and impact resistance.

To examine the repeated impact resistance, the test piece was placed on a GFRP plate in the same manner as in Example 1, and an impact with $E_I$ of about 4.8 J (h = 20.0 cm) was applied to the test piece at an interval of 1.5 minutes 10 times. No cracks were caused in the GFRP plate under the test piece. In Comparative Example 1, the GFRP plate was cracked by a smaller number of applications of the impact even with a lower level of $E_I$. In the block copolymer composition containing the groups capable of hydrogen bonding in Example 1, the GFRP plate was cracked by a smaller number of applications of the impact with the same quantity of $E_I$ as that in Example 2. From these results, the ionic group-containing block copolymer composition in Example 2 is considered to have higher repeated impact resistance.

An impact with $E_I$ of about 11.4 J (h = 45.0 cm) or $E_I$ of about 12.6 J (h = 50.0 cm) was applied to the test piece at an interval of 1.5 minutes several times in the same manner as above. No cracks were caused in the GFRP plate under the test piece till the sixth impact, and the GFRP plate was cracked on the seventh impact.

[Comparative Example 2]

In Comparative Example 2, as a standard plastic, a commercially available polystyrene (Sigma-Aldrich, Product No. 441147, Mw: about 350000, Mn: about 170000) was subjected to a drop weight impact test. To be noted, the polystyrene has a molecular weight between entanglement points of about 130000 (140°C) (L. J. Fetters, D. J. Lohse, D. Richter, T. A. Witten, A. Zirkel, Macromolecules, 27, 4639-4647 (1994).), and is considered to have sufficient entanglement.

The result obtained from the drop weight impact test performed in the same manner as in Example 1 is shown in Table 1. As shown in Table 1, at $E_I$ = 0.60 J (h = 2.5 cm), $E_A$ was 0.39 J and r was 0.65, and even at relatively low impact energy $E_I$ of 1.20 J (h = 5.0 cm), the test piece was largely cracked and broken. The impact resistance was lower than that of the block copolymer composition in Comparative Example 1. It is considered that this is because the polystyrene is hard at room temperature and does not contain a soft component, and energy is not dispersed at the molecular level when an impact is applied.

[Comparative Example 3]

In Comparative Example 3, as a standard plastic, a commercially available polymethyl methacrylate (Sigma-Aldrich, Product No. 19-3760-5) was subjected to a drop weight impact test.
A test piece having a thickness of 4.2 mm was prepared in the same manner as in Example 1, and was subjected to a drop weight impact test in the same manner as in Example 1. The result is shown in Table 1. The drop weight impact test was performed in the same manner as in Example 1. While breakage of the test pieces was not observed at $E_I \leq$ 1.77 J (h $\leq$ 7.5 cm), the test piece was largely cracked and broken even at relatively low impact energy $E_I$ of 2.37 J (h = 10.0 cm). It is considered that this is because the polymethyl methacrylate is hard at room temperature and does not contain a soft component, and energy is not dispersed at the molecular level when an impact is applied.

[Comparative Example 4]

In Comparative Example 4, as a standard plastic, a commercially available poly(bisphenol A carbonate) (Sigma-Aldrich, Product No. 435139, weight average molecular weight against polystyrene standards by GPC: 45000, molecular weight distribution: 2.19) was subjected to a drop weight impact test.
In Comparative Example 4, a test piece having a thickness of 4.0 mm was prepared in the same manner as in Example 1, and was subjected to a drop weight impact test in the same manner as in Example 1. The result is shown in Table 1. While plastic deformation was not observed at $E_I$ = 2.36 J (h = 10.0 cm), a dent (diameter: about 7 mm), that is, plastic deformation was caused in the test piece at impact energy $E_I$ of 3.57 J (h = 15.0 cm).

[Comparative Example 5]

In Comparative Example 5, a commercially available ethylenepropylene-diene rubber (EPDM) containing carbon black (Tigers Polymer Corporation, Product No. TEKL7007-HP) was subjected to a monoaxial tensile test and a drop weight impact test.
A tensile test was performed in the same manner as in Example 1 at an initial strain rate of 0.10/s (tensile rate: 1.0 mm/s). The elongation at break was 720%, which was 70% or more smaller than that in Example 1. Accordingly, the amine-modified block copolymer composition in Example 1 was more excellent in elongation.
A drop weight impact test was performed on a plate having a thickness of 4.0 mm in the same manner as in Example 1 to evaluate the impact resistance. The result is shown in Table 2. While breakage of the test pieces was not observed at $E_I \leq$ 11.4 J (h $\leq$ 45.0 cm), the test piece was cracked and broken at $E_I$ = 12.6 J (h = 50.0 cm). The ionic group-containing block copolymer composition in Example 2 demonstrated higher impact resistance.
To examine the repeated impact resistance, the test piece was placed on a GFRP plate, and an impact with $E_I$ of about 11.4 J (h = 45.0 cm) was applied to the test piece at an interval of 1.5 minutes several times. No cracks were caused in the GFRP plate under the test piece till the second impact, and the GFRP plate was cracked on the third impact. It is considered that the ionic group-containing block copolymer composition has higher repeated impact resistance.

[Comparative Example 6]

In Comparative Example 6, a commercially available natural rubber (NR) containing carbon black (Tigers Polymer Corporation, Product No. TAKL6503) was subjected to a monoaxial tensile test and a drop weight impact test.
A tensile test was performed in the same manner as in Example 1 at an initial strain rate of 0.10/s (tensile rate: 1.0 mm/s). The elongation at break was 320%, which was about 90% smaller than that in Example 1. Accordingly, the amine-modified block copolymer composition in Example 1 was more excellent in elongation.
A drop weight impact test was performed on a plate having a thickness of 4.0 mm in the same manner as in Example 1 to evaluate the impact resistance. The result is shown in Table 2. While breakage of the test pieces was not observed at $E_I \leq$ 7.29 J (h $\leq$ 30.0 cm), the test piece was cracked and broken at $E_I$ = 9.99 J (h = 40.0 cm). The ionic group-containing block copolymer composition in Example 2 demonstrated higher impact resistance.

[Example 3]

In Example 3, a succinic anhydride-modified block copolymer composition having a succinic anhydride unit introduction ratio of 3.7 mol% was prepared by performing the same reaction as in Example 1 except that the amount of succinic anhydride used was changed. Furthermore, the succinic anhydride-modified block copolymer composition was treated with n-butylamine in the same manner as in Example 1 to prepare a membrane of an amine-modified block copolymer composition.

A test piece having a thickness of 4.2 mm was prepared in the same manner as in Example 1, and was subjected to a drop weight impact test in the same manner as in Example 1. The result is shown in Table 2. Fig. 14 shows the energy-time curve at $E_I$ = 2.49 J (h = 10.0 cm). As shown in Fig. 6 and Table 1, at this time, $E_A$ was 1.82 J and r was 0.731. While r was smaller than that of the sample in Example 1 having a higher introduction ratio of the functional group capable of hydrogen bonding, r was larger than that of the sample in Comparative Example 1 without a functional group capable of noncovalent bonding. It is considered that a larger number of functional groups capable of hydrogen bonding leads to a larger number of hydrogen bonds to be cut, thus relaxing a larger quantity of energy. Fig. 14 also shows the energy-time curve when a different level of $E_I$ (h=15.0 cm) was applied in the range in which breakage of the test piece was not observed. Table 1 shows $E_A$ and r when different levels of $E_I$ were applied.

The impact resistance was also evaluated in the same manner as in Example 1. In Example 3, while breakage of the test pieces was not observed at $E_I \leq$ 3.77 J (h $\leq$ 15.0 cm), the test piece was radially cracked and broken at $E_I$ = 4.43 J (h = 17.5 cm). Higher impact resistance was demonstrated than that of Comparative Example 1 before introduction of a functional group capable of noncovalent bonding. It is considered that this is because impact energy is dispersed due to dissociation of hydrogen bonds when an impact is applied to the test piece. In Example 3, it is expected that the mechanical properties other than the impact resistance are also similar to those in Example 1, because the functional groups capable of hydrogen bonding were also introduced into the block copolymer composition.

[Example 4]

In Example 4, a membrane-like sample of a block copolymer in which ionic bonds were formed was prepared in the same manner as in Example 2 except that the amine-modified block copolymer composition prepared in Example 3 was used as an amine-modified block copolymer composition before reacting with sodium methoxide, and the amounts of the amine-modified block copolymer composition in Example 3, Irganox 565, Irgafos 168, THF, and the methanol solution of sodium methoxide (concentration: 5 mol/L) were changed to 3.73 g, 26 mg, 37 mg, 40 g, and 0.320 mL, respectively. The sample was subjected to a drop weight impact test in the same manner as in Example 2. At this time, the molar amount of the carboxy group and that of sodium methoxide were substantially equal, and the ionic functional group introduction ratio was 3.7 mol%.

A test piece having a thickness of 4.3 mm was prepared in the same manner as in Example 1, and was subjected to a drop weight impact test in the same manner as in Example 1. The result is shown in Table 2. Fig. 15 shows the energy-time curve at $E_I$ = 2.49 J (h = 10.0 cm). As shown in Fig. 6 and Table 2, at this time, $E_A$ was 1.49 J and r was 0.596. While r was smaller than that in the sample in Example 2 having a higher ionic functional group introduction ratio and that in the sample in Example 3 having the functional groups capable of hydrogen bonding, r was larger than that in the sample in Comparative Example 1 without a functional group capable of noncovalent bonding. Fig. 15 also shows the energy-time curve when different levels of $E_I$ were applied in the range in which breakage of the test piece was not observed. Table 2 also shows $E_A$ and r when different levels of $E_I$ were applied.

The impact resistance was also evaluated in the same manner as in Example 1. In Example 4, while breakage of the test pieces was not observed at $E_I \leq$ 7.62 J (h $\leq$ 30.0 cm), the test piece was radially cracked and broken at $E_I$ = 8.26 J (h = 32.5 cm). Example 4 demonstrated higher impact resistance than the sample in Comparative Example 1 before introduction of a functional group capable of noncovalent bonding and the samples in Examples 1 and 3 having the functional groups capable of hydrogen bonding. In Example 4, it is expected that the mechanical properties other than the impact resistance are also similar to those in Example 2, because an ionic bonding functional group was introduced into the block copolymer composition.

[Example 5]

In Example 5, a membrane-like sample of an ionic group-containing block copolymer composition was prepared in the same manner as in Example 2 except that the methanol solution of sodium methoxide used in preparation of the ionic group-containing block copolymer composition in Example 2 was replaced by a methanol solution of lithium methoxide (concentration: 10 wt%). The sample was subjected to a drop weight impact test in the same manner as in Example 2. At this time, the molar amount of the carboxy group and that of lithium methoxide were substantially equal, and the ionic functional group introduction ratio was adjusted to be 7.8 mol%.

A test piece having a thickness of 4.3 mm was prepared in the same manner as in Example 1, and was subjected to a drop weight impact test in the same manner as in Example 1. The result is shown in Table 3. At $E_I$ = 2.48 J (h = 10.0 cm), $E_A$ was 1.48 J and r was 0.597. Thus, r was larger than that in the sample in Comparative Example 1 without a functional group capable of noncovalent bonding. Table 2 shows $E_A$ and r when different levels of $E_I$ were applied.
The impact resistance was also evaluated in the same manner as in Example 1. In Example 5, while breakage of the test pieces was not observed at $E_I \leq$ 20.5 J (h $\leq$ 80.0 cm), the test piece was radially cracked and broken at $E_I$ = 21.8 J (h = 85.0 cm). Example 5 demonstrated higher impact resistance than Comparative Example 1 before introduction of a functional group capable of noncovalent bonding. In Example 5, it is expected that the mechanical properties other than the impact resistance are also similar to those in Example 2, because an ionic bonding functional group was introduced into the block copolymer composition.

[Example 6]

In Example 6, a membrane-like sample of an ionic group-containing block copolymer composition was prepared in the same manner as in Example 2 except that the methanol solution of sodium methoxide used in preparation of the ionic group-containing block copolymer composition in Example 2 was replaced by an ethanol solution of barium ethoxide (concentration: 10%w/v). The sample was subjected to a drop weight impact test in the same manner as in Example 2. At this time, barium was in the form of a divalent ion. Thus, barium ethoxide was added in a substantially 1/2 molar amount to that of the carboxy group. The ionic functional group introduction ratio was adjusted to be 7.8 mol%.
A test piece having a thickness of 4.1 mm was prepared in the same manner as in Example 1, and was subjected to a drop weight impact test in the same manner as in Example 1. The result is shown in Table 3. At $E_I$ = 2.49 J (h = 10.0 cm), $E_A$ was 1.25 J and r was 0.502. Thus, r was larger than that in the sample in Comparative Example 1 without a functional group capable of noncovalent bonding. Table 2 shows $E_A$ and r when different levels of $E_I$ were applied.
The impact resistance was also evaluated in the same manner as in Example 1. In Example 6, while breakage of the test pieces was not observed at $E_I \leq$ 20.3 J (h $\leq$ 80.0 cm), the test piece was cracked and broken at $E_I$ = 21.9 J (h = 85.0 cm). Example 6 demonstrated higher impact resistance than Comparative Example 1 before introduction of a functional group capable of noncovalent bonding. In Example 6, it is expected that the mechanical properties other than the impact resistance are also similar to those in Example 2, because an ionic bonding functional group was introduced into the block copolymer composition.
To examine the repeated impact resistance, as in Example 1, the test piece was placed on a GFRP plate, and an impact with $E_I$ of about 15.3 J (h = 60.0 cm) was applied to the test piece at an interval of 1.5 minutes several times. No cracks were caused in the GFRP plate under the test piece till the fifth impact, and the GFRP plate was cracked on the sixth impact.

[Comparative Example 7]

In Comparative Example 7, a commercially available glass fiber-reinforced plastic (GFRP) plate (length: 150 mm, width: 100 mm, thickness: 4.2 mm, RYODEN KASEI CO., LTD., Product No. PGE-6635, resin component: epoxy resin cured product, glass component: alumina borosilicate glass) was subjected to a drop weight impact test.
The drop weight impact test was performed in the same manner as in Example 1 except that two overlaid GFRP plates were set inside the apparatus. The result is shown in Table 4. The drop weight impact test was performed. Even at relatively low impact energy $E_I$ of 1.19 J (h = 5.0 cm), the upper GFRP plate as the test piece was cracked and broken. Comparative Example 7 demonstrated lower impact resistance than the block copolymer composition in Comparative Example 1. It is considered that this is because GFRP does not contain any soft component, and energy is not dispersed at the molecule level when the impact is applied. At $E_I$ = 17.8 J (h = 70.0 cm), the breakage in the upper GFRP plate as the test piece extended to the rear surface thereof. At $E_I$ = 18.8 J (h = 75.0 cm), not only the breakage in the upper GFRP plate as the test piece extended to the back surface thereof, but also cracks were observed on the surface of the lower GFRP plate.
To examine the repeated impact resistance, an impact with $E_I$ of about 15.2 J (h = 60.0 cm) was applied to the two overlaid GFRP plates at an interval of 1.5 minutes several times. No cracks were caused in the lower GFRP plate under the test piece till the third impact, and the lower GFRP plate was cracked on the fourth impact. The ionic group-containing block copolymer composition in Example 6 had higher repeated impact resistance.

[Example 7]

In Example 7, a sample was prepared by mixing the ionic group-containing block copolymer composition prepared in Example 2 and polymethyl methacrylate used in Comparative Example 3 in a weight ratio of the ionic group-containing block copolymer composition:the polymethyl methacrylate = 97.5:2.5, and was subjected to a drop weight

impact test.

Specifically, 5.12 g of an ionic group-containing block copolymer composition (succinic anhydride unit introduction ratio: 7.8 mol%) was prepared in the same manner as in Example 2. The block copolymer composition and 0.131 g of polymethyl methacrylate used in Comparative Example 3 were dissolved in 100 g of mixed solvent of THF and methanol (volume ratio: 9:1). The resulting solution was transferred to a PFA vessel, and was left to stand on a hot plate at 50°C for 1.5 days to evaporate the solvent. Subsequently, the product was dried with a vacuum dryer for about one day to completely remove the solvent. A uniform membrane was obtained. A test piece having a thickness of 4.3 mm was prepared in the same manner as in Example 1 by hot press, and was subjected to a drop weight impact test. The result is shown in Table 4. At $E_I$ = 2.38 J (h = 10.0 cm), $E_A$ was 1.42 J and r was 0.597. Thus, r was smaller than that of the ionic group-containing block copolymer composition before blending. Table 3 shows $E_A$ and r when different levels of $E_I$ were applied.

The impact resistance was also evaluated in the same manner as in Example 1. In Example 7, while breakage of the test pieces was not observed at $E_I \leq 17.8$ J (h $\leq$ 70.0 cm), the test piece was cracked and broken at $E_I$ = 20.4 J (h = 80.0 cm). Higher impact resistance than that of the ionic group-containing block copolymer composition (Example 2) before blending was demonstrated. It is considered that the reason why higher impact resistance was demonstrated in spite of lower impact absorbing properties is because in addition to dissociation of ionic bonds, the bonding strength of the ionic bond significantly stronger than that of the hydrogen bond and a certain degree of interaction of ions and polymethyl methacrylate, which is a hard molecule, provided a block copolymer composition having increased hardness and toughness.

To examine the repeated impact resistance, as in Example 1, a GFRP plate was set, and the test piece was placed thereon. An impact with $E_I$ of about 12.6 J (h = 50.0 cm) was applied to the test piece at an interval of 1.5 minutes 10 times. No cracks were caused in the GFRP plate under the test piece. This sample had higher repeated impact resistance than that of the ionic group-containing block copolymer composition in Example 2 having high impact resistance.

[Example 8]

In Example 8, a sample was prepared in the same manner as in Example 7 by mixing the ionic group-containing block copolymer composition (succinic anhydride unit introduction ratio: 7.8 mol%) prepared in Example 2 and polymethyl methacrylate used in Comparative Example 3 in a weight ratio of 95:5. As shown in the optical microscope image in Fig. 16, similarly to Example 7, the ionic group-containing block copolymer composition and polymethyl methacrylate were homogenously mixed in the resulting sample. Thus, high impact resistance and high mechanical properties are expected as in Example 7. It is considered that these were homogenously mixed because interaction occurs between the ionic functional groups in the block copolymer composition and ester bonds of polymethyl methacrylate.

A test piece having a thickness of 3.9 mm was prepared in the same manner as in Example 1 by hot press, and was subjected to a drop weight impact test to evaluate the impact resistance (Table 5). While breakage of the test pieces was not observed at $E_I \leq 15.2$ J (h $\leq$ 60.0 cm), the test piece was cracked and broken at $E_I$ = 16.6 J (h = 65.0 cm). Higher impact resistance than that of the ionic group-containing block copolymer composition before blending (Example 2) was demonstrated.

[Example 9]

In Example 9, a sample was prepared in the same manner as in Example 7 by mixing the ionic group-containing block copolymer composition (succinic anhydride unit introduction ratio: 7.8 mol%) in Example 2 and poly(bisphenol A carbonate) used in Comparative Example 4 in a weight ratio of 95:5. As shown in an optical microscope image in Fig. 18, similarly to Example 7, the ionic group-containing block copolymer composition and poly(bisphenol A carbonate) were homogenously mixed in the resulting sample. Thus, high impact resistance and high mechanical properties are expected as in Example 7. It is considered that these were homogenously mixed because interaction occurs between the ionic functional groups in the block copolymer composition and the carbonate groups in poly(bisphenol A carbonate).

[Example 10]

In Example 10, a sample was prepared in the same manner as in Example 7 by mixing the ionic group-containing block copolymer composition (succinic anhydride unit introduction ratio: 7.8 mol%) in Example 2 and poly(4-sodium styrenesulfonate) (Sigma-Aldrich, Product No. 243051, Mw: about 70000) in a weight ratio of 95:5. As shown in an optical microscope image in Fig. 20, similarly to Example 7, the ionic group-containing block copolymer composition and poly(4-sodium styrenesulfonate) were homogenously mixed in the resulting sample. Thus, high impact resistance and high mechanical properties are expected as in Example 7. It is considered that these were homogenously mixed

because interaction occurs between the ionic functional groups in the block copolymer composition and the ions in poly(4-sodium styrenesulfonate).

[Example 11]

In Example 11, a sample (thickness: 4.3 mm) was prepared in the same manner as in Example 7 by mixing the ionic group-containing block copolymer composition prepared in Example 6 and polymethyl methacrylate used in Comparative Example 3 in a weight ratio of the ionic group-containing block copolymer composition:polymethyl methacrylate = 97.5:2.5, and was subjected to a drop weight impact test (Table 5). A uniform membrane was obtained. The impact resistance was also evaluated in the same manner as in Example 1. While the test piece was cracked and broken at $E_I$ = 20.3 J (h = 80.0 cm), breakage of the test piece was not observed at $E_I \leq$ 19.2 J (h $\leq$ 75.0 cm). High impact resistance was demonstrated.

[Table 1]

Table 1

| | | Example 1 | | | | Comparative Example 1 | | Example 2 | | | | | | | Comparative Example 2 | | Comparative Example 3 | | | Comparative Example 4 | |
|---|---|---|---|---|---|---|---|---|---|---|---|---|---|---|---|---|---|---|---|---|---|
| Base polymer | | Quintac 3440 | | | | Quintac 3440 | | Quintac 3440 | | | | | | | Polystyrene | | Polymethyl methacrylate | | | Poly(bisphenol A carbonate) | |
| Succinic anhydric unit introduction ratio (mol%) | | 7.8 | | | | – | | 7.8 | | | | | | | – | | – | | | – | |
| Basic compound | | – | | | | – | | NaOMe | | | | | | | – | | – | | | – | |
| Elongation at break (%) at initial strain rate of 0.1/s | | 3130 | | | | 2930 | | 2700 | | | | | | | – | | – | | | – | |
| Drop weight impact test | Height *h* (cm) of drop weight | 10.0 | 15.0 | 17.5 | 20.0 | 5.0 | 7.5 | 10.0 | 20.0 | 30.0 | 40.0 | 45.0 | 50.0 | 55.0 | 2.5 | 5.0 | 5.0 | 7.5 | 10.0 | 10.0 | 15.0 |
| | Impact energy $E_I$ (J) | 2.46 | 3.73 | 4.38 | 5.10 | 1.23 | 1.89 | 2.48 | 4.85 | 7.49 | 10.1 | 11.5 | 12.8 | 14.2 | 0.60 | 1.20 | 1.20 | 1.77 | 2.37 | 2.36 | 3.57 |
| | Absorbed energy $E_A$ (J) | 1.98 | 3.16 | 3.74 | – | 0.65 | – | 1.73 | 3.81 | 5.91 | 8.05 | 9.49 | 9.97 | – | 0.39 | – | 0.76 | 1.18 | – | 1.63 | – |
| | Energy absorption ratio *r* (–) | 0.805 | 0.847 | 0.854 | – | 0.53 | – | 0.698 | 0.786 | 0.789 | 0.800 | 0.825 | 0.782 | – | 0.65 | – | 0.63 | 0.667 | – | 0.691 | – |
| | Breakage | Not broken | Not broken | Not broken | Broken | Not broken | Broken | Not broken | Not broken | Not broken | Not broken | Not broken | Not broken | Broken | Not broken | Broken | Not broken | Not broken | Broken | Not broken | Broken |

[Table 2]

Table 2

| | | Comparative Example 5 | | | | | | Comparative Example 6 | | | | Example 3 | | | Example 4 | | | | |
|---|---|---|---|---|---|---|---|---|---|---|---|---|---|---|---|---|---|---|---|
| Base polymer | | EPDM | | | | | | NR | | | | Quintac 3440 | | | Quintac 3440 | | | | |
| Succinic anhydric unit introduction ratio (mol%) | | - | | | | | | - | | | | 3.7 | | | 3.7 | | | | |
| Basic compound | | - | | | | | | - | | | | - | | | NaOMe | | | | |
| Elongation at break (%) at initial strain rate of 0.1/s | | 720 | | | | | | 320 | | | | - | | | - | | | | |
| Drop weight impact test | Height *h* (cm) of drop weight | 10.0 | 20.0 | 30.0 | 40.0 | 45.0 | 50.0 | 10.0 | 20.0 | 30.0 | 40.0 | 10.0 | 15.0 | 17.5 | 10.0 | 15.0 | 20.0 | 30.0 | 32.5 |
| | Impact energy E, (J) | 2.33 | 4.84 | 7.29 | 9.83 | 11.4 | 12.6 | 2.34 | 4.85 | 7.25 | 9.99 | 2.49 | 3.77 | 4.43 | 2.49 | 3.76 | 5.09 | 7.62 | 8.26 |
| | Absorbed energy $E_A$ (J) | 1.81 | 4.10 | 6.12 | 8.20 | 9.64 | - | 2.06 | 4.20 | 6.14 | - | 1.82 | 2.80 | - | 1.49 | 2.33 | 3.72 | 5.83 | - |
| | Energy absorption ratio *r* (-) | 0.777 | 0.847 | 0.840 | 0.834 | 0.848 | - | 0.880 | 0.866 | 0.847 | - | 0.731 | 0.743 | - | 0.598 | 0.620 | 0.731 | 0.765 | - |
| | Breakage | Not broken | Not broken | Not broken | Not broken | Not broken | Broken | Not broken | Not broken | Not broken | Broken | Not broken | Not broken | Broken | Not broken | Not broken | Not broken | Not broken | Broken |

[Table 3]

Table 3

| | | Example 5 | | | | | | | | | Example 6 | | | | | | | | |
|---|---|---|---|---|---|---|---|---|---|---|---|---|---|---|---|---|---|---|---|
| Base polymer | | Quintac 3440 | | | | | | | | | Quintac 3440 | | | | | | | | |
| Succinic anhydric unit introduction ratio (mol%) | | 7.8 | | | | | | | | | 7.8 | | | | | | | | |
| Basic compound | | LiOMe | | | | | | | | | $Ba(OEt)_2$ | | | | | | | | |
| Drop weight impact test | Height *h* (cm) of drop weight | 10.0 | 20.0 | 30.0 | 40.0 | 50.0 | 60.0 | 70.0 | 80.0 | 85.0 | 10.0 | 20.0 | 30.0 | 40.0 | 50.0 | 60.0 | 70.0 | 80.0 | 85.0 |
| | Impact energy $E_I$ (J) | 2.48 | 5.07 | 7.62 | 10.13 | 12.8 | 15.6 | 18.0 | 20.5 | 21.8 | 2.49 | 5.10 | 7.66 | 10.2 | 12.8 | 15.3 | 18.1 | 20.3 | 21.9 |
| | Absorbed energy $E_A$ (J) | 1.48 | 3.70 | 5.59 | 7.60 | 9.87 | 12.3 | 14.1 | 15.9 | - | 1.25 | 2.89 | 5.41 | 7.47 | 9.45 | 11.4 | 14.0 | 15.7 | - |
| | Energy absorption ratio *r* (-) | 0.597 | 0.730 | 0.734 | 0.750 | 0.774 | 0.788 | 0.781 | 0.775 | - | 0.502 | 0.567 | 0.706 | 0.731 | 0.737 | 0.745 | 0.772 | 0.777 | - |
| | Breakage | Not broken | Not broken | Not broken | Not broken | Not broken | Not broken | Not broken | Not broken | Broken | Not broken | Not broken | Not broken | Not broken | Not broken | Not broken | Not broken | Not broken | Broken |

[Table 4]

Table 4

| | | Comparative Example 7 (GFRP) | | | | | | | | | Example 7 | | | | | | | |
|---|---|---|---|---|---|---|---|---|---|---|---|---|---|---|---|---|---|---|
| Base polymer | | - | | | | | | | | | Quintac 3440 | | | | | | | |
| Succinic anhydric unit introduction ratio (mol%) | | - | | | | | | | | | 7.8 | | | | | | | |
| Basic compound | | - | | | | | | | | | NaOMe | | | | | | | |
| Blend polymer | | - | | | | | | | | | PMMA | | | | | | | |
| Weight ratio | | - | | | | | | | | | 97.5:2.5 | | | | | | | |
| Drop weight impact test | Height *h* (cm) of drop weight | 5.0 | 10.0 | 20.0 | 30.0 | 40.0 | 50.0 | 60.0 | 70.0 | 75.0 | 10.0 | 20.0 | 30.0 | 40.0 | 50.0 | 60.0 | 70.0 | 80.0 |
| | Impact energy $E_I$ (J) | 1.19 | 2.35 | 4.77 | 7.25 | 9.73 | 12.5 | 15.0 | 17.8 | 18.8 | 2.38 | 4.82 | 7.31 | 9.88 | 12.7 | 15.3 | 17.8 | 20.4 |
| | Absorbed energy $E_A$ (J) | - | - | - | - | - | - | - | - | - | 1.42 | 3.39 | 5.24 | 7.30 | 9.79 | 12.4 | 14.4 | - |
| | Energy absorption ratio *r* (-) | - | - | - | - | - | - | - | - | - | 0.597 | 0.703 | 0.717 | 0.739 | 0.770 | 0.808 | 0.810 | - |
| | Breakage | Broken | Broken | Broken | Broken | Broken | Broken | Broken | Broken (penetrated) | Broken (lower plate also broken) | Not broken | Not broken | Not broken | Not broken | Not broken | Not broken | Not broken | Broken |

[Table 5]

Table 5

| | | Example 8 | | | | | | | Example 11 | | | | | | | | |
|---|---|---|---|---|---|---|---|---|---|---|---|---|---|---|---|---|---|
| Base polymer | | Quintac 3440 | | | | | | | Quintac 3440 | | | | | | | | |
| Succinic anhydric unit introduction ratio (mol%) | | 7.8 | | | | | | | 7.8 | | | | | | | | |
| Basic compound | | NaOMe | | | | | | | $Ba(OEt)_2$ | | | | | | | | |
| Blend polymer | | PMMA | | | | | | | PMMA | | | | | | | | |
| Weight ratio | | 95:5 | | | | | | | 97.5:2.5 | | | | | | | | |
| Drop weight impact test | Height $h$ (cm) of drop weight | 10.0 | 20.0 | 30.0 | 40.0 | 50.0 | 60.0 | 65.0 | 10.0 | 20.0 | 30.0 | 40.0 | 50.0 | 60.0 | 70.0 | 75.0 | 80.0 |
| | Impact energy $E_I$ (J) | 2.37 | 4.84 | 7.38 | 10.03 | 12.6 | 15.2 | 16.6 | 2.38 | 4.87 | 7.37 | 9.96 | 12.8 | 15.3 | 17.8 | 19.2 | 20.3 |
| | Absorbed energy $E_A$ (J) | 1.54 | 3.53 | 5.73 | 7.73 | 9.82 | 12.0 | - | 1.35 | 3.32 | 5.14 | 7.18 | 9.63 | 11.9 | 14.4 | 16.4 | - |
| | Energy absorption ratio $r$ (-) | 0.650 | 0.729 | 0.776 | 0.771 | 0.781 | 0.789 | - | 0.567 | 0.682 | 0.697 | 0.721 | 0.754 | 0.782 | 0.810 | 0.857 | - |
| | Breakage | Not broken | Not broken | Not broken | Not broken | Not broken | Not broken | Broken | Not broken | Not broken | Not broken | Not broken | Not broken | Not broken | Not broken | Not broken | Broken |

## Claims

1. A thermoplastic elastomer composition for an impact-resistant material, comprising a block copolymer composition comprising a block copolymer (B) in which a functional group capable of noncovalent bonding is introduced into a block copolymer (A) including at least one aromatic vinyl polymer block and at least one conjugated diene polymer block.

2. The thermoplastic elastomer composition for an impact-resistant material according to claim 1, wherein the functional group capable of noncovalent bonding is at least one group selected from the group consisting of functional groups capable of hydrogen bonding, functional groups capable of coordinate bonding, and functional groups capable of ionic bonding.

3. The thermoplastic elastomer composition for an impact-resistant material according to claim 1 or 2, wherein the functional group capable of noncovalent bonding is at least one group selected from the group consisting of groups formed by reacting a carboxyl group or an acid anhydride group with a base, and groups formed by hydrolyzing an acid anhydride group with a base.

4. The thermoplastic elastomer composition for an impact-resistant material according to claim 3, wherein the acid anhydride group is a group derived from an unsaturated dicarboxylic anhydride.

5. The thermoplastic elastomer composition for an impact-resistant material according to claim 3 or 4, wherein the base is at least one compound selected from the group consisting of alkali metal-containing compounds, alkaline earth metal-containing compounds, ammonia, and amine compounds.

6. The thermoplastic elastomer composition for an impact-resistant material according to claim 1 or 2, wherein the functional group capable of noncovalent bonding is at least one group selected from the group consisting of ionic groups formed by neutralization by mixing an Arrhenius acid and an Arrhenius base, and ionic groups formed by neutralization by mixing a Bronsted acid and a Bronsted base.

7. The thermoplastic elastomer composition for an impact-resistant material according to claim 1 or 2, wherein the functional group capable of noncovalent bonding is a group containing a salt of a carboxylic acid.

8. The thermoplastic elastomer composition for an impact-resistant material according to any one of claims 1 to 7, wherein the weight average molecular weight of the aromatic vinyl polymer block is within the range of 3,000 to 50,000, and
the vinyl bond content of the conjugated diene polymer block is within the range of 0.1 mol% to 50 mol%, and the weight average molecular weight of the conjugated diene polymer block is within the range of 10,000 to 500,000.

9. The thermoplastic elastomer composition for an impact-resistant material according to any one of claims 1 to 8, wherein the aromatic vinyl polymer block is a polystyrene block.

10. The thermoplastic elastomer composition for an impact-resistant material according to any one of claims 1 to 9, wherein the conjugated diene polymer block is a polybutadiene block, a polyisoprene block, or a polybutadiene-polyisoprene copolymerized block.

11. The thermoplastic elastomer composition for an impact-resistant material according to any one of claims 1 to 10, further comprising a different polymer other than the block copolymer composition.

12. The thermoplastic elastomer composition for an impact-resistant material according to claim 11, wherein the different polymer other than the block copolymer composition is at least one member selected from the group consisting of acrylic polymers, polycarbonate resins, poly(4-sodium styrenesulfonate), polystyrene resins, styrene-maleimide copolymers, styrene-N-phenylmaleimide-methyl methacrylate copolymers, rubber-reinforced impact-resistant polystyrene, acrylonitrile-styrene copolymers, ABS copolymer resins, and methyl methacrylate resins.

13. The thermoplastic elastomer composition for an impact-resistant material according to any one of claims 1 to 12, wherein the thermoplastic elastomer composition is for use in a material having fatigue resistance and impact resistance.

**14.** An impact-resistant material comprising the thermoplastic elastomer composition for an impact-resistant material according to any one of claims 1 to 13.

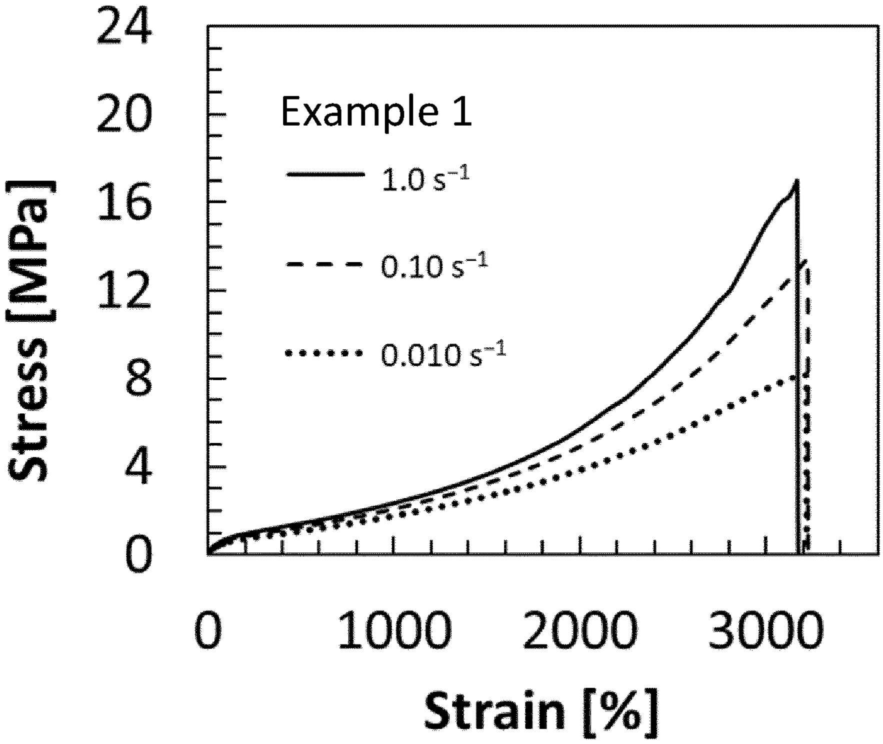
24
20
16
12
8
4
0
Stress [MPa]
Example 1
1.0 s⁻¹
0.10 s⁻¹
0.010 s⁻¹
0
1000
2000
3000
Strain [%]

Fig. 1

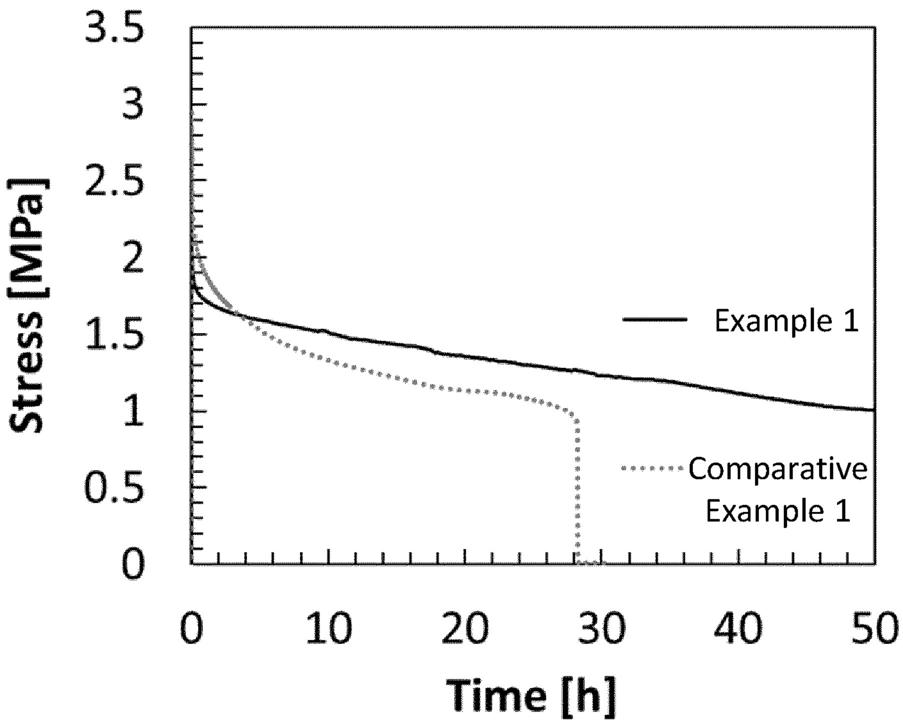
3.5
3
2.5
2
1.5
1
0.5
0
Stress [MPa]
0
10
20
30
40
50
Time [h]
Example 1
Comparative
Example 1

Fig. 2

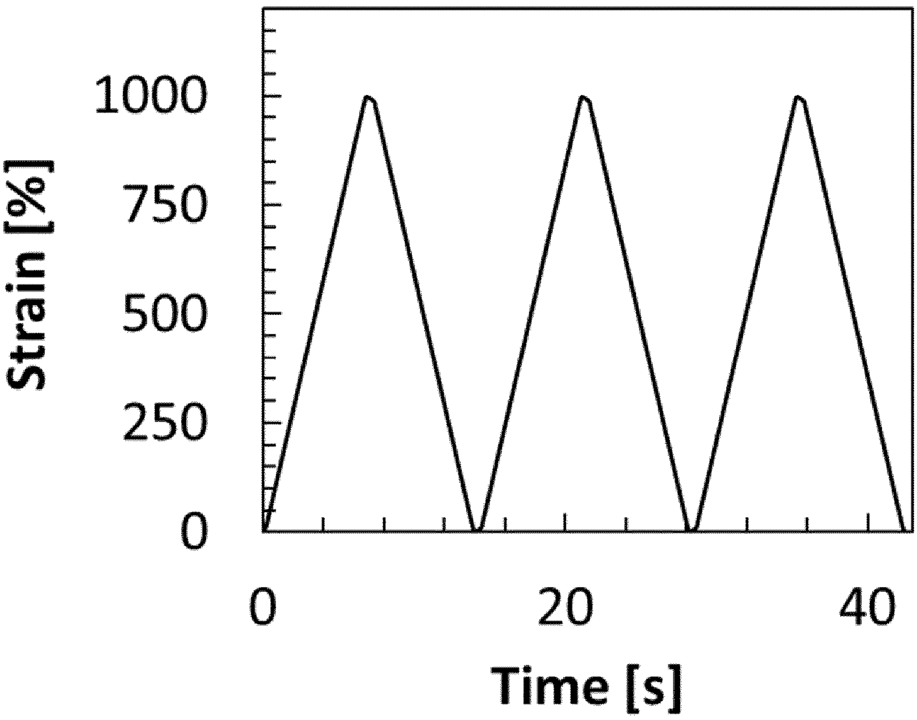


Fig. 3

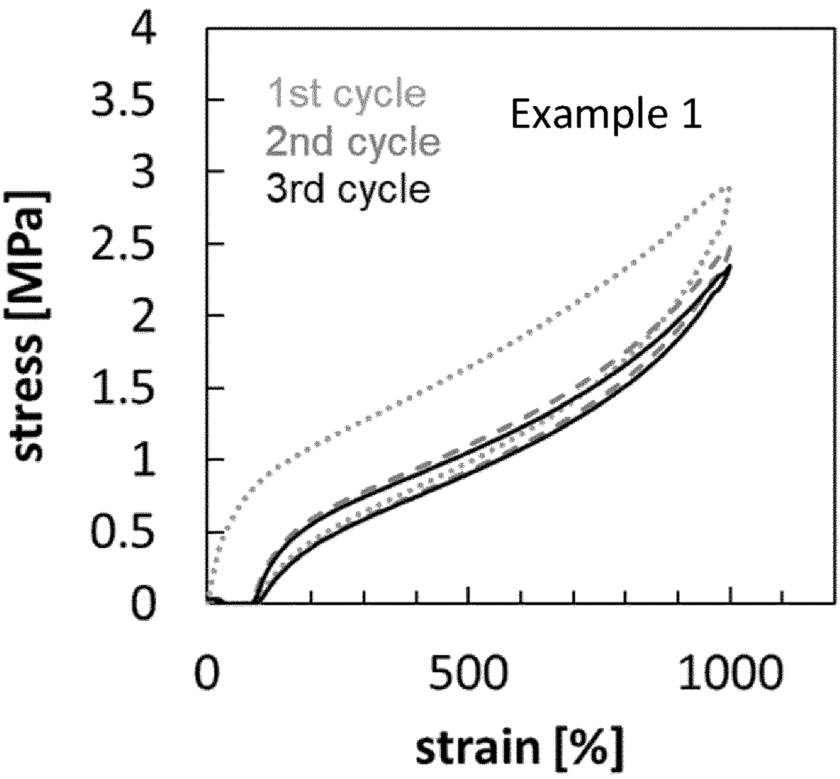
4
3.5
3
2.5
2
1.5
1
0.5
0
stress [MPa]
1st cycle
2nd cycle
3rd cycle
Example 1
0
500
1000
strain [%]

Fig. 4

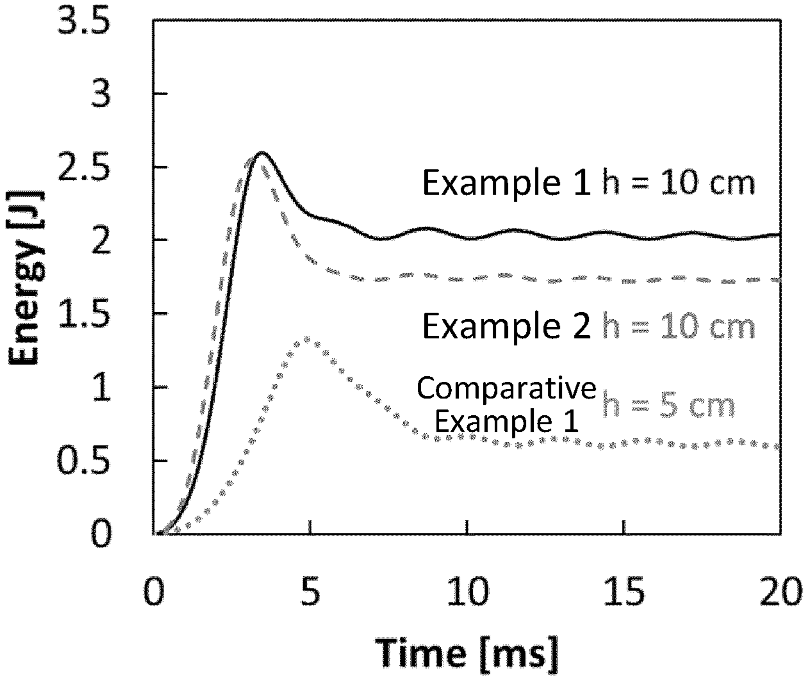
3.5
3
2.5
2
1.5
1
0.5
0
Energy [J]
0
5
10
15
20
Time [ms]
Example 1 h = 10 cm
Example 2 h = 10 cm
Comparative Example 1 h = 5 cm

Fig. 5

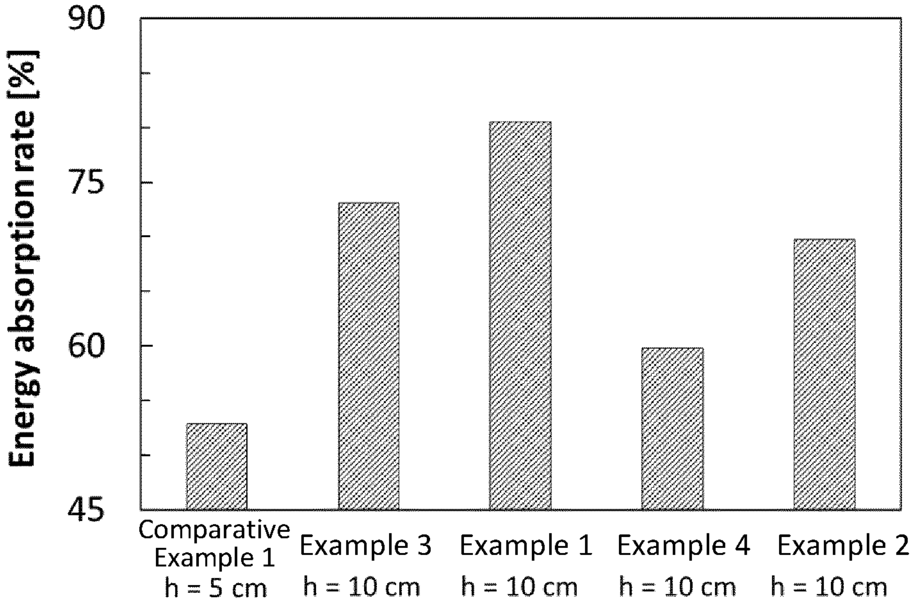
90
75
60
45
Energy absorption rate [%]
Comparative Example 1 h = 5 cm
Example 3 h = 10 cm
Example 1 h = 10 cm
Example 4 h = 10 cm
Example 2 h = 10 cm

Fig. 6

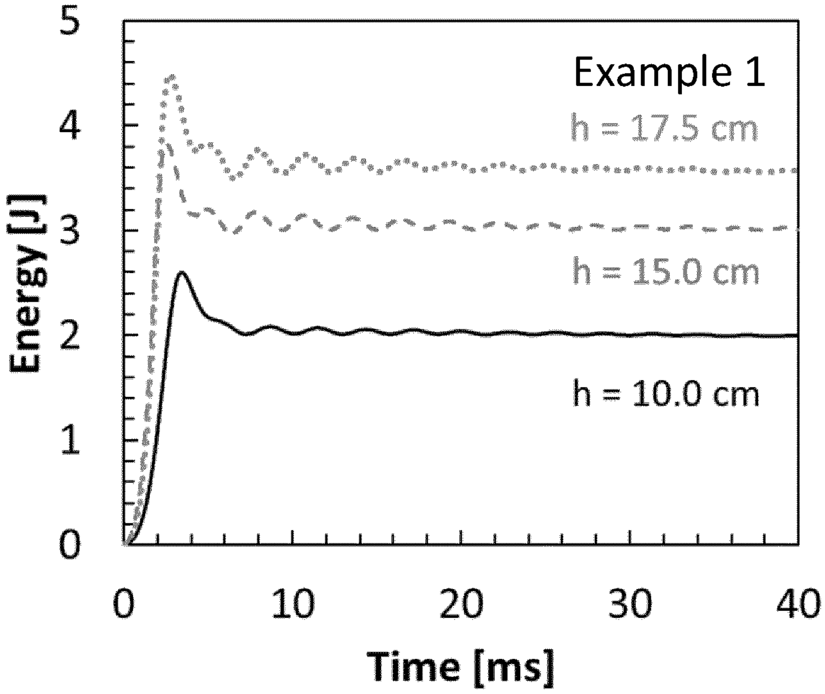
Example 1
h = 17.5 cm
h = 15.0 cm
h = 10.0 cm
Energy [J]
Time [ms]
0
1
2
3
4
5
0
10
20
30
40

Fig. 7

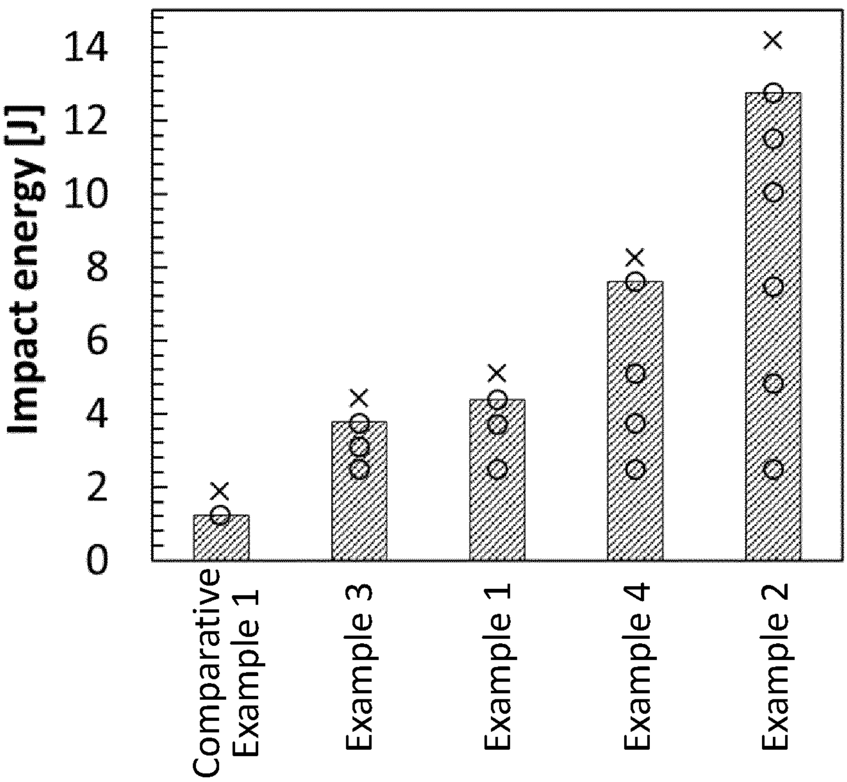
Impact energy [J]
0
2
4
6
8
10
12
14
Comparative Example 1
Example 3
Example 1
Example 4
Example 2

Fig. 8

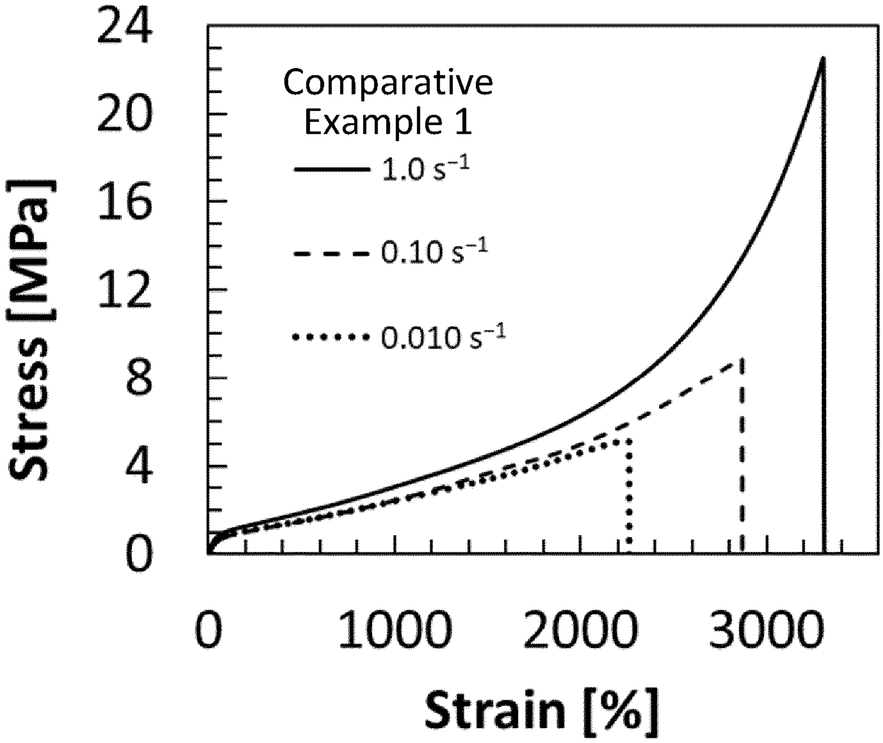

24
20
16
12
8
4
0
Stress [MPa]
0
1000
2000
3000
Strain [%]
Comparative Example 1
1.0 s$^{-1}$
0.10 s$^{-1}$
0.010 s$^{-1}$


Fig. 9

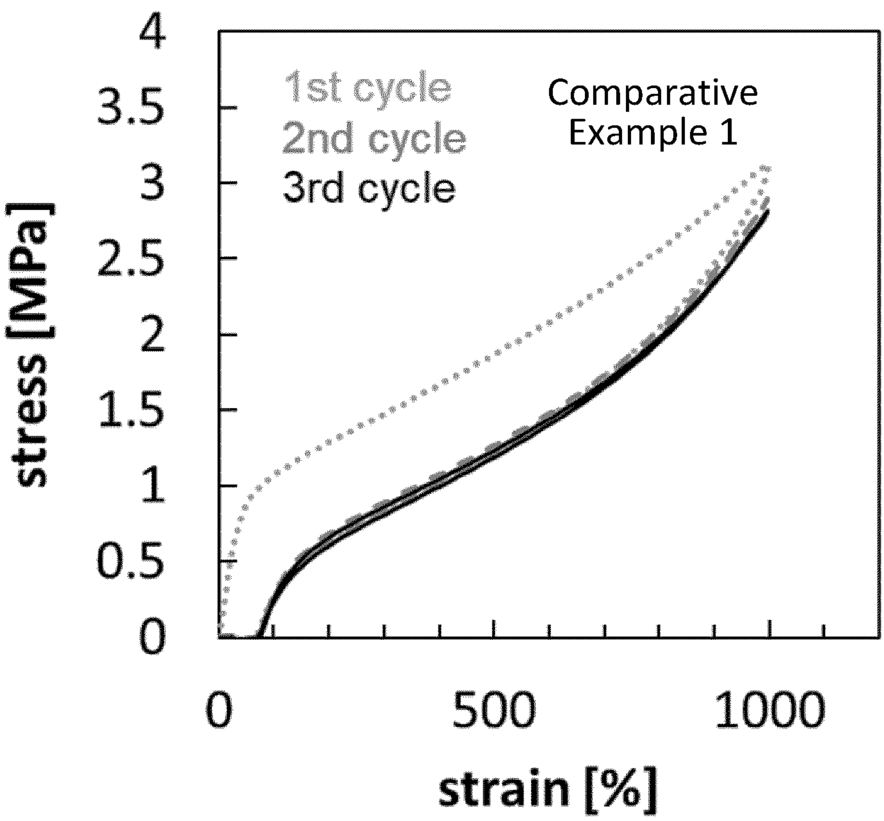
4
3.5
3
2.5
2
1.5
1
0.5
0
stress [MPa]
1st cycle
2nd cycle
3rd cycle
Comparative
Example 1
0
500
1000
strain [%]

Fig. 10

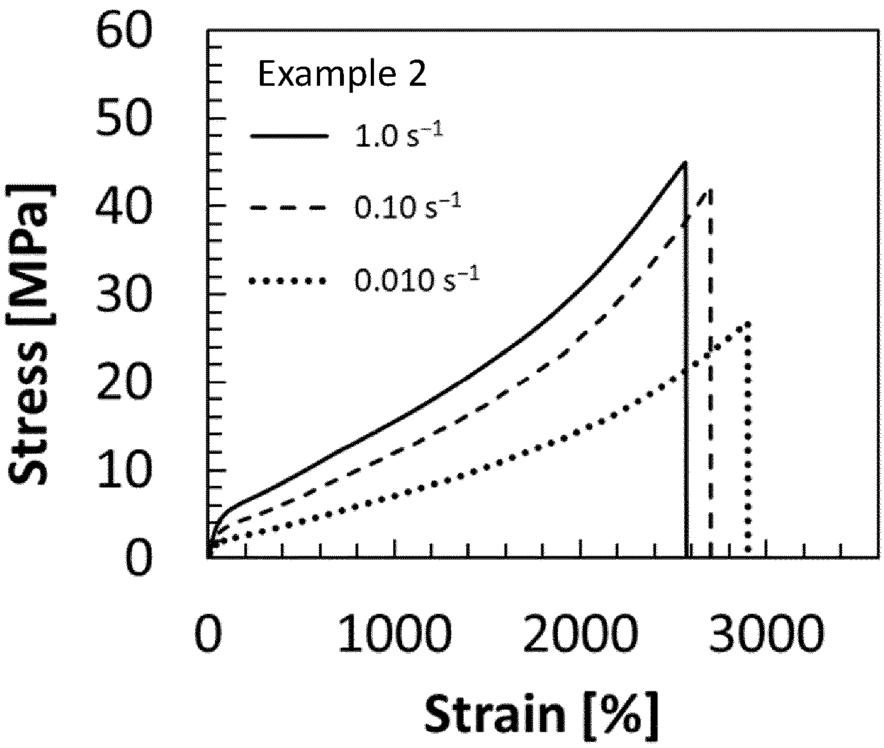
60
50
40
30
20
10
0
Stress [MPa]
Example 2
1.0 s⁻¹
0.10 s⁻¹
0.010 s⁻¹
0
1000
2000
3000
Strain [%]

Fig. 11

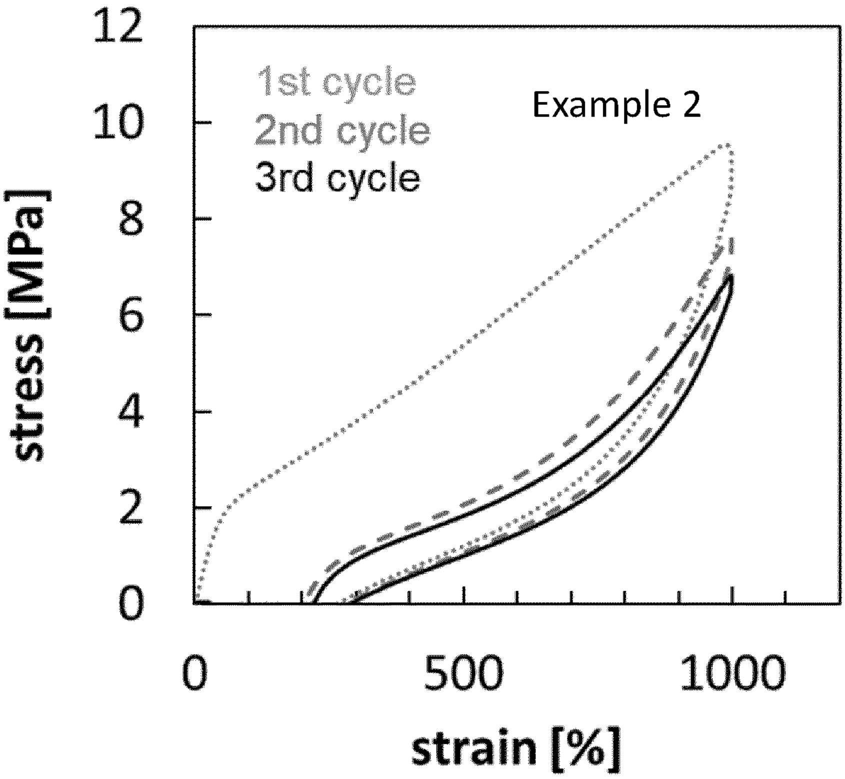
12
10
8
6
4
2
0
stress [MPa]
1st cycle
2nd cycle
3rd cycle
Example 2
0
500
1000
strain [%]

Fig. 12

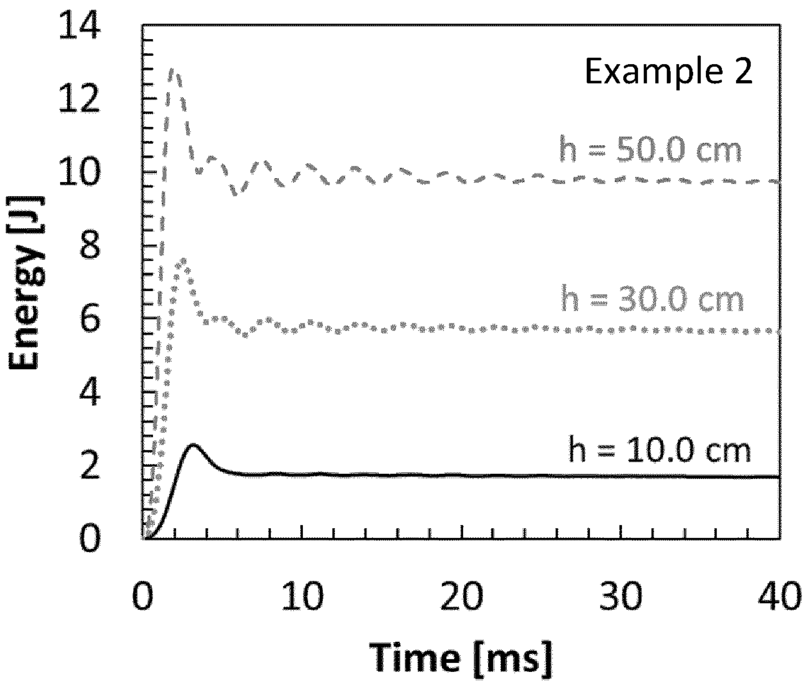
Example 2
h = 50.0 cm
h = 30.0 cm
h = 10.0 cm
Energy [J]
Time [ms]
0
2
4
6
8
10
12
14
0
10
20
30
40

Fig. 13

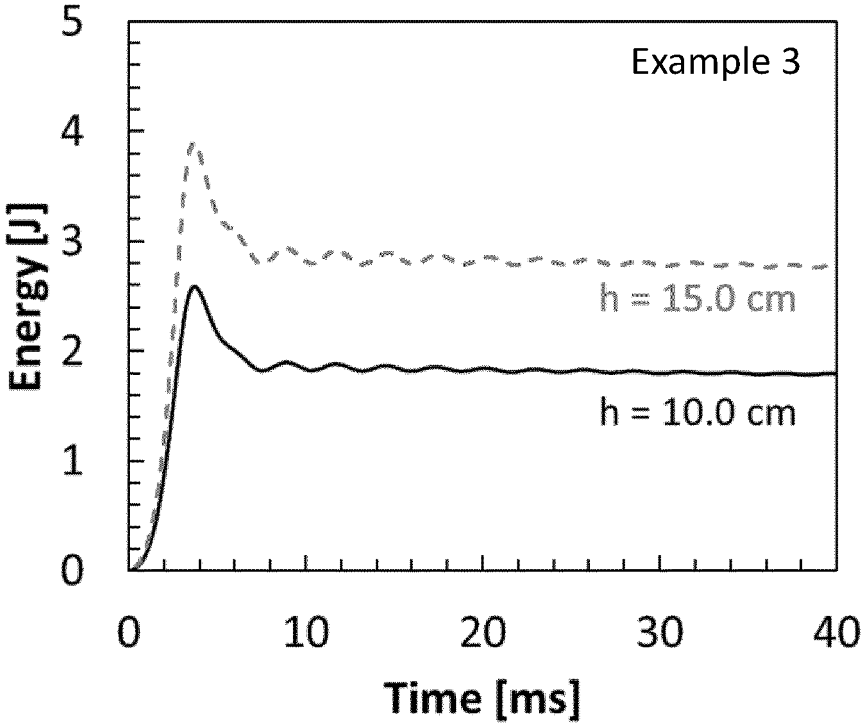


Fig. 14

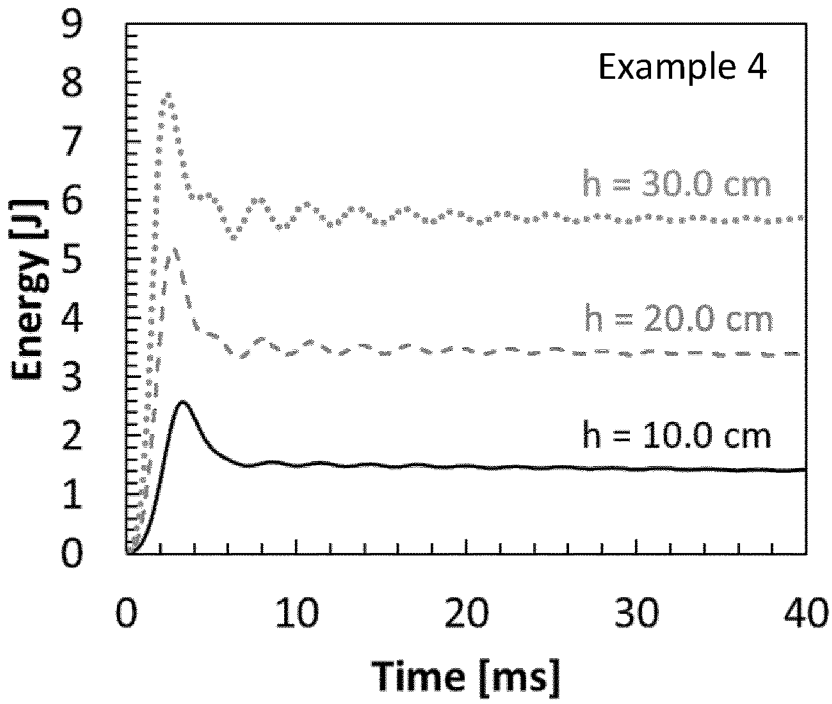
Example 4
h = 30.0 cm
h = 20.0 cm
h = 10.0 cm
Energy [J]
Time [ms]
0
1
2
3
4
5
6
7
8
9
0
10
20
30
40

Fig. 15

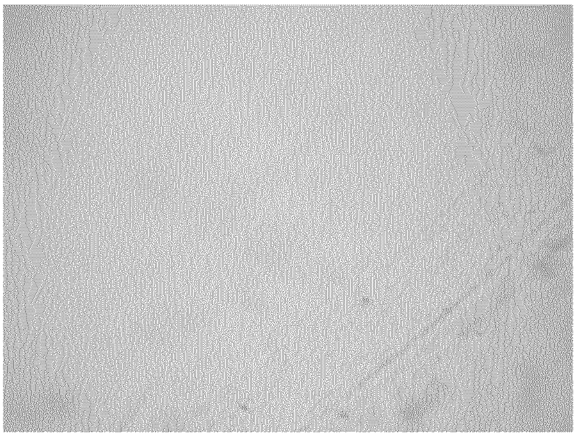

Fig. 16

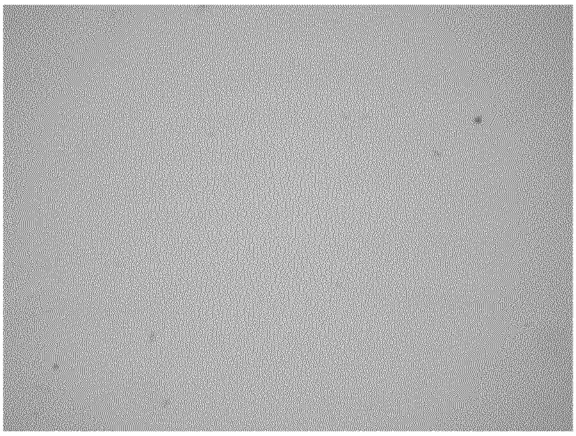

Fig. 17

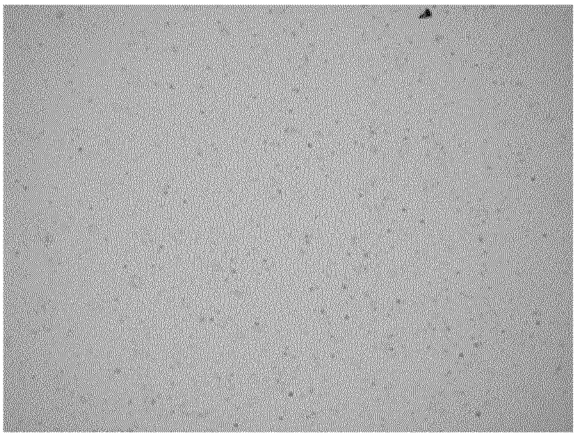

Fig. 18

**INTERNATIONAL SEARCH REPORT**

International application No. PCT/JP2021/004159

A. CLASSIFICATION OF SUBJECT MATTER
Int.Cl. C08F8/32(2006.01)i, C08F8/44(2006.01)i, C08F8/46(2006.01)i, C08F297/04(2006.01)i, C08L53/02(2006.01)i, C08L101/00(2006.01)i
FI: C08L53/02, C08L101/00, C08F297/04, C08F8/46, C08F8/44, C08F8/32
According to International Patent Classification (IPC) or to both national classification and IPC

B. FIELDS SEARCHED
Minimum documentation searched (classification system followed by classification symbols)
Int.Cl. C08F8/32, C08F8/44, C08F8/46, C08F297/04, C08L53/02, C08L101/00

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | WO 2019/216241 A1 (ZEON CORPORATION) 14 November 2019 (2019-11-14), claims, paragraphs [0173], [0182] | 1-14 |
| X | WO 2019/044660 A1 (ZEON CORPORATION) 07 March 2019 (2019-03-07), claims, paragraphs [0090]-[0118], [0163]-[0179], [0196] | 1-14 |
| X | JP 56-116702 A (ASAHI KASEI KOGYO CO., LTD.) 12 September 1981 (1981-09-12), claims, page 3, lower right column to page 4, upper left column, examples | 1-14 |
| X<br>A | JP 3-68648 A (DAICEL CHEM IND LTD.) 25 March 1991 (1991-03-25), claims, page 3, upper left column to lower left column, examples | 1-3, 8-14<br>4-7 |
| X<br>A | WO 2007/029497 A1 (KRATON JSR ELASTOMERS KK) 15 March 2007 (2007-03-15), claims, examples 6, 7 | 1-3, 8-14<br>4-7 |

☒ Further documents are listed in the continuation of Box C.    ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 25 March 2021 | 13 April 2021 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2021/004159

C (Continuation). DOCUMENTS CONSIDERED TO BE RELEVANT

| Category* | Citation of document, with indication, where appropriate, of the relevant passages | Relevant to claim No. |
|---|---|---|
| A | WO 2019/230527 A1 (KURARAY CO., LTD.) 05 December 2019 (2019-12-05), entire text | 1-14 |
| A | JP 64-85245 A (ASAHI KASEI KOGYO CO., LTD.) 30 March 1989 (1989-03-30), entire text | 1-14 |

Form PCT/ISA/210 (second sheet) (January 2015)

**INTERNATIONAL SEARCH REPORT**
Information on patent family members

International application No.
PCT/JP2021/004159

| | | |
|---|---|---|
| WO 2019/216241 A1 | 14 November 2019 | (Family: none) |
| WO 2019/044660 A1 | 07 March 2019 | EP 3677645 A1<br>claims, paragraphs [0090]-[0118], [0163]-[0179], [0196] |
| JP 56-116702 A | 12 September 1981 | (Family: none) |
| JP 3-68648 A | 25 March 1991 | (Family: none) |
| WO 2007/029497 A1 | 15 March 2007 | (Family: none) |
| WO 2019/230527 A1 | 05 December 2019 | TW 202003674 A |
| JP 64-85245 A | 30 March 1989 | GB 2053238 A<br>DE 3022258 A1 |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2016089099 A
- JP 2001146533 A
- WO 2009123089 A
- JP 2012077158 A


### Non-patent literature cited in the description


- **Y. SONG ; Y. LIU ; T. QI ; G. L. LI.** *Angew, Chemie Int. Ed.,* 2018, vol. 57, 13838-13838
- **L. J. FETTERS ; D. J. LOHSE ; D. RICHTER ; T. A. WITTEN ; A. ZIRKEL.** *Macromolecules,* 1994, vol. 27, 4639-4647